(19) Europäisches Patentamt
European Patent Office
Office européen des brevets

(11) **EP 4 660 347 A1**

(12) **EUROPEAN PATENT APPLICATION**
published in accordance with Art. 153(4) EPC

(43) Date of publication:
**10.12.2025 Bulletin 2025/50**

(21) Application number: **24779540.4**

(22) Date of filing: **14.03.2024**

(51) International Patent Classification (IPC):
*C22C 38/00* (2006.01)     *C21D 9/46* (2006.01)
*C22C 38/06* (2006.01)     *C22C 38/60* (2006.01)

(52) Cooperative Patent Classification (CPC):
**C21D 9/46; C22C 38/00; C22C 38/06; C22C 38/60**

(86) International application number:
**PCT/JP2024/010116**

(87) International publication number:
**WO 2024/203411 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058444**

(71) Applicant: **JFE Steel Corporation
Tokyo 100-0011 (JP)**

(72) Inventors:
• **NOGUCHI Kotomi
Tokyo 100-0011 (JP)**
• **MATSUI Yoichiro
Tokyo 100-0011 (JP)**
• **CHIBA Tadachika
Tokyo 100-0011 (JP)**
• **KIMURA Hideyuki
Tokyo 100-0011 (JP)**

(74) Representative: **Hoffmann Eitle
Patent- und Rechtsanwälte PartmbB
Arabellastraße 30
81925 München (DE)**

(54) **STEEL SHEET, MEMBER, AND METHOD FOR MANUFACTURING SAME**

(57)     Provided is a steel sheet and a member having a tensile strength (TS) of 780 MPa or more, high ductility and stretch flangeability, and excellent axial crash properties, and methods for producing the same.

A steel sheet has a chemical composition with specified C, Si, Mn, P, S, sol. Al, and N contents and has a steel microstructure containing, in area fractions, a microstructure composed of at least one of ferrite and bainitic ferrite: 10% or more and 60% or less, a microstructure composed of at least one of tempered martensite and lower bainite: 20% or more and 80% or less, retained austenite: 5% or more, and fresh martensite: 10% or less. The average C concentration in the retained austenite is 0.60 mass% or more. In a region within 100 $\mu$m from a steel sheet surface in a thickness direction, a content of Fe element present as carbides in the tempered martensite is 0.20 mass% or less on average.

FIG. 2

**Description**

Technical Field

The present invention relates to a high-strength steel sheet that is applied to various usages including automobiles and home electric appliances and that has excellent formability suitable for energy-absorbing members, and to a member and methods for producing the same.

Background Art

As the needs for weight reduction of automotive bodies have grown in recent years, high-strength steel sheets that have a tensile strength (TS) of 780 MPa or more have been increasingly applied to frame parts and seat parts of automobiles. However, when such high-strength steel sheets are formed by cold pressing, press cracking tends to occur due to degradation in ductility and stretch flangeability. In addition, when necking (narrowing) occurs during pressing, the thickness locally decreases, resulting in failure products as with the case of cracking; thus, proneness to necking must be evaluated in order to obtain better press formability. From this viewpoint, not elongation at the time of fracture (total elongation: T-El) but elongation immediately before occurrence of necking (uniform elongation: U-El) is required as the indicator of the ductility.

Furthermore, from the viewpoint of safety of passengers, deformation of the cabin and the vicinity thereof upon collision must be suppressed, and thus energy-absorbing members such as side members are required to absorb collision energy by becoming deformed upon collision. However, due to degradation in axial crash properties, high-strength steel sheets having a tensile strength of 780 MPa or more are prone to cause member fracture upon collision, starting from the site subjected to a primary process by forming, and have an issue of inability to stably exhibit the collision energy-absorbing function.

Thus, in order for high-strength steel sheets having TS of 780 MPa or more to be applicable to energy-absorbing members of automobiles, not only ductility and stretch flangeability but also excellent axial crash properties are required.

Under such circumstances, for example, Patent Literature 1 discloses that a steel sheet having a tensile strength of 980 MPa or more and excellent elongation and flangeability is obtained, the steel sheet containing, in mass%, C: 0.15% or more and 0.30% or less, P: 0.040% or less, S: 0.0100% or less, N: 0.0100% or less, O: 0.0060% or less, either or both of Si and Al: 0.70% or more and 2.50% or less in total, either or both of Mn and Cr: 1.50% or more and 3.50% or less in total, Mo: 0% or more and 1.00% or less, Ni: 0% or more and 1.00% or less, Cu: 0% or more and 1.00% or less, Nb: 0% or more and 0.30% or less, Ti: 0% or more and 0.30% or less, V: 0% or more and 0.30% or less, B: 0% or more and 0.0050% or less, Ca: 0% or more and 0.0400% or less, Mg: 0% or more and 0.0400% or less, and REM: 0% or more and 0.0400% or less, with the balance being Fe and impurities, in which the area fractions relative to the entire microstructure are as follows: either or both of ferrite and granular bainite: 10% or more and 50% or less in total, either or both of upper bainite and lower bainite: 10% or more and 50% or less in total, tempered martensite: more than 0% and 30% or less, retained austenite: 5% or more, and at least one of pearlite, cementite, and martensite: 0% or more and 10% or less in total and in which the area fraction of the ferrite relative to the total area fraction of the ferrite and the granular bainite is 25% or less.

Patent Literature 2 discloses that a high-strength hot-dip galvanized steel sheet having a tensile strength of 980 MPa or more and excellent fracture resistance upon collision is obtained, the steel sheet having a steel composition containing, in mass%, C: 0.07 to 0.20%, Si: 0.1 to 2.0%, Mn: 2.0 to 3.5%, P: 0.05% or less, S: 0.05% or less, and Sol. Al: 0.005 to 0.1% with the balance being Fe and incidental impurities, and having a steel microstructure in which area fractions are as follows: ferrite: 60% or less, tempered martensite: 40% or more, and fresh martensite: 10% or less, in which the void number-density in a bent portion in a VDA bending test is adjusted to 1500 voids/mm$^2$ or less.

Patent Literature 3 discloses that a high-strength cold rolled steel sheet having excellent strength, ductility, and flangeability is obtained, the steel sheet containing, in mass%, C: 0.10 to 0.40%, Mn: 0.5 to 4.0%, Si: 0.005 to 2.5%, Al: 0.005 to 2.5%, Cr: 0 to 1.0%, and the balance being iron and incidental impurities with P limited to 0.05% or less, S limited to 0.02% or less, and N limited to 0.006% or less, and having a steel microstructure containing, in area fractions, 2 to 30% of retained austenite and 20% or less of martensite, in which the average grain size of cementite is 0.01 $\mu$m or more and 1 $\mu$m or less, and the aforementioned cementite contains 30% or more and 100% or less of cementite having an aspect ratio of 1 or more and 3 or less.

Citation List

Patent Literature

PTL 1: Japanese Patent No. 6338038
PTL 2: Japanese Patent No. 6795122
PTL 3: Japanese Patent No. 4903915

Summary of Invention

Technical Problem

In Patent Literature 1, granular bainite is utilized to reduce as much as possible the difference in hardness between different phases in a multi-phase steel sheet and to thereby suppress degradation of stretch flangeability associated with the increase in ferrite. In this manner, it becomes possible to produce a steel sheet having excellent ductility and stretch flangeability, but the axial crash properties are not considered.

In Patent Literature 2, it is possible to produce a steel sheet having excellent axial crash properties by reducing the void density; however, since bainite phase having an intermediate hardness between ferrite and tempered martensite is not contained, the difference in hardness between different phases is large, and there is an issue of low stretch flangeability. Patent Literature 3 states that a steel sheet having excellent ductility and stretch flangeability is obtained by controlling the morphology of cementite; however, axial crash properties are not considered, and cracks occur from cementite as the starting points during bending deformation, and the axial crash properties are degraded.

The present invention has been made to address the aforementioned issues, and an object thereof is to provide a steel sheet and a member having a high tensile strength (TS) of 780 MPa or more, high uniform elongation and stretch flangeability, and excellent axial crash properties, and methods for producing the same.

In the present invention, the tensile strength is measured by a tensile test according to JIS Z 2241 (2011).

In the present invention, high ductility means that, in regard to the uniform elongation (U-El) measured in a tensile test according to JIS Z 2241 (2011),

(A) in a TS range of 780 MPa or more and less than 980 MPa, U-El is 16.0% or more,
(B) in a TS range of 980 MPa or more and less than 1180 MPa, U-El is 11.0% or more, and
(C) in a TS range of 1180 MPa or more, U-El is 8.0% or more.

Furthermore, in the present invention, high stretch flangeability means that when a 100 mm $\times$ 100 mm square sample is punched with a punching tool having a punch diameter of 10 mm and a die diameter of 10.3 mm (13% clearance) and then the hole is expanded with a conical punch with 60 degree apex angle until cracks that penetrate through the thickness occur while arranging the burr, which has been formed by making the hole by punching, to face outward, the hole expansion ratio $\lambda$ (%) = {(d - $d_0$)/$d_0$} $\times$ 100 is 30% or more where $d_0$ represents the initial hole diameter (mm) and d represents the hole diameter (mm) at the time the cracks occur.

In the present invention, excellent axial crash properties refer to a steel sheet having a VDA bend angle $\alpha$ of 70° or more in VDA bending.

Here, a VDA bending test is a bending test (Verband der Automobilindustrie: VDA bending test) according to VDA standards (VDA238-100) standardized by the German Association of the Automotive Industry, and is a 3-point bending test characterized by an extremely narrow roller spacing and a sharp punch. The VDA bending test uses a 60 mm $\times$ 60 mm square test specimen and involves supporting the test specimen by rollers having a roller diameter D of 30 mm and a roller spacing L of (thickness $a_0 \times$ 2) + 0.5 mm such that the bending ridge direction is parallel to the rolling direction, and then pushing a punch having a tip r of 0.4 mm into the test specimen from above at a stroke rate of 20 mm/min. The VDA bend angle $\alpha$ is an angle (° (more specifically, the unit is "°/mm" but hereinafter referred to as "°")) calculated by using equations (1) to (5) from the stroke S (mm) under the maximum load in the aforementioned bending test, and can be used as an indicator of the axial crash properties. Here, the stroke S (mm) under the maximum load is the length (mm) by which the punch has moved from the start of testing to the time point when the maximum load is obtained.

$$c \ (mm) \ = \ D/2 \ + \ r \ + \ a_0 \ \cdots (equation \ 1)$$

$$p \ (mm) \ = \ D/2 \ + \ L/2 \ \cdots (equation \ 2)$$

[Math. 1]

$$W \ (mm) \ = \sqrt{p^2 + (S-c)^2} - c^2 \qquad \cdots \text{(equation 3)}$$

[Math. 2]

$$\sin \frac{\alpha c}{2} = \frac{p \times c + W \times (S-c)}{p^2 + (S-c)^2} \qquad \cdots \text{(equation 4)}$$

[Math. 3]

$$\cos \frac{\alpha c}{2} = \frac{W \times p - c \times (S-c)}{p^2 + (S-c)^2} \qquad \cdots \text{(equation 5)}$$

Solution to Problem

The inventors of the present invention have conducted extensive studies on a steel sheet having high strength, excellent ductility and stretch flangeability, and excellent axial crash properties, and have arrived at the following conclusions.

(1) A steel slab having a specified chemical composition is hot-rolled and cold-rolled, and then, from the viewpoints of strength, stretch flangeability, and axial crash properties, the resulting sheet is subjected to an annealing treatment at an annealing temperature of 750°C or higher and $A_{c3}$ temperature (°C) or lower, and is cooled from the annealing temperature at a specified cooling rate to control the total area fraction of ferrite and bainitic ferrite to 10% or more and 60% or less.

(2) During the cooling performed after the aforementioned annealing treatment, the cooling stop temperature is set to 200°C or higher and (martensite transformation start temperature Ms (°C) - 30°C) or lower so as to partially substitute austenite with martensite and/or bainite. Martensite and bainite formed as such cause carbon to concentrate into the surrounding non-transformed austenite during the overaging treatment step after stopping the cooling and contribute to securing a specified C concentration in the retained austenite and improving the ductility.

In addition, it is possible to perform a retention treatment during cooling, and by retaining the temperature range from 500°C to a martensite transformation start temperature Ms or higher and 320°C or higher for 10 s or longer and 60 s or shorter, a larger amount of bainite can be obtained and the ductility can be improved further.

(3) In the aforementioned overaging treatment step after stopping the cooling, heating is performed to a heating temperature of 300°C or higher and 450°C or lower. Next, cooling is performed to a temperature 30°C to 150°C lower than the aforementioned heating temperature at an average cooling rate of 0.5°C/s or more, and further cooling is performed to a temperature of 150°C or higher and 350°C or lower at an average cooling rate of 0.1°C/s or more. Next, holding is performed in the temperature range from 150°C or higher and 350°C or lower for 20 s or longer and 1000 s or shorter. In this manner, precipitation of carbides in the tempered martensite present in the steel sheet surface layer and serving as the starting point of the crack propagation in the VDA bending can be minimized, and the axial crash properties can be improved. In addition, due to the aforementioned heat treatment step (the step of heating to 300 to 450°C after stopping the cooling and then finally holding the temperature range 150°C or higher and 350°C or lower for 20 s or longer and 1000 s or shorter), carbon partitioning from the surrounding microstructure to the non-transformed austenite region is accelerated, and thus the carbon concentration in the retained austenite can be further increased and the ductility can be improved.

As such, particularly by appropriately controlling the temperature history in the cooling process after the annealing and the overaging treatment process, decreasing the carbides in the tempered martensite and increasing the carbon concentration in the retained austenite can be simultaneously achieved. As a result, a steel sheet that has a specified tensile strength TS and excellent ductility, stretch flangeability, and axial crash properties can be produced.

The present invention has been made based on the aforementioned findings and specifically provides the following.

[1] A steel sheet including:

a chemical composition containing, in mass%,

C: 0.10% or more and 0.30% or less,
Si: 0.5% or more and 2.0% or less,
Mn: 1.5% or more and 3.0% or less,
P: 0.10% or less,
S: 0.020% or less,
sol. Al: 1.00% or less,
N: 0.015% or less, and
the balance being Fe and incidental impurities; and

a steel microstructure containing, in area fractions,

a microstructure composed of at least one of ferrite and bainitic ferrite: 10% or more and 60% or less,
a microstructure composed of at least one of tempered martensite and lower bainite: 20% or more and 80% or less, retained austenite: 5% or more,
fresh martensite: 10% or less,

wherein:

an average C concentration in the retained austenite is 0.60 mass% or more, and

in a region within 100 $\mu$m from a steel sheet surface in a thickness direction, a content of Fe element present as carbides in the tempered martensite is 0.20 mass% or less on average.

[2] The steel sheet described in [1], wherein the chemical composition further contains, in mass%, at least one element selected from

Ti: 0.100% or less,
Nb: 0.100% or less,
V: 0.100% or less,
B: 0.0050% or less,
Cr: 1.000% or less,
Cu: 1.000% or less,
Sb: 0.200% or less,
Sn: 0.200% or less,
Ta: 0.100% or less,
Ca: 0.0050% or less,
Mg: 0.0050% or less, and
REM: 0.0050% or less.

[3] The steel sheet described in [1] or [2], including a zinc coating layer on the steel sheet surface.
[4] A member including the steel sheet according to any one of [1] to [3].
[5] A method for producing a steel sheet, the method including:

hot-rolling and cold-rolling a steel slab having the chemical composition described in [1] or [2] to obtain a cold rolled sheet;
then subjecting the cold rolled steel sheet to an annealing treatment at an annealing temperature of 750°C or higher and an $A_{c3}$ temperature (°C) or lower;
then cooling the cold rolled steel sheet in a range from the annealing temperature to a temperature T1 of 200°C or higher and (Ms temperature (°C) - 30°C) or lower at an average cooling rate CR1 of 3°C/s or more and 100°C/s or less,
heating the cold rolled steel sheet in a temperature range from the temperature T1 to a temperature T2 of 300°C or higher and 450°C or lower at an average heating rate of 2°C/s or more;
cooling the cold rolled steel sheet in a temperature range from the temperature T2 to a temperature T3 of (T2 - 150°C) or higher and (T2 - 30°C) or lower at an average cooling rate CR2 of 0.5°C/s or more;

cooling the cold rolled steel sheet in a temperature range from the temperature T3 to a temperature T4 of 150°C or higher and 350°C or lower and the temperature T3 or lower at an average cooling rate CR3 of 0.1°C/s or more, holding the cold rolled steel sheet in a temperature range from 150°C or higher and 350°C or lower and the temperature T4 or lower for 20 s or longer and 1000 s or shorter; and

cooling the cold rolled steel sheet to a temperature of 50°C or lower at an average cooling rate CR4 of 1°C/s or more.

[6] A method for producing a steel sheet, the method including:

hot-rolling and cold-rolling a steel slab having the chemical composition described in [1] or [2] to obtain a cold rolled sheet;

then subjecting the cold rolled steel sheet to an annealing treatment at an annealing temperature of 750°C or higher and an $A_{c3}$ temperature (°C) or lower;

then cooling the cold rolled steel sheet in a temperature range from the annealing temperature to 500°C at an average cooling rate CR5 of 5°C/s or more and 100°C/s or less;

retaining the cold rolled steel sheet in a temperature range from 500°C to a retention stop temperature T5 of an Ms temperature (°C) or higher and 320°C or higher at an average cooling rate CR6 of 10°C/s or less for 10 s or longer and 60 s or shorter;

cooling the cold rolled steel sheet in a temperature range from the retention stop temperature T5 to a temperature T1 of 200°C or higher and (Ms temperature (°C) - 30°C) or lower at an average cooling rate CR7 of 3°C/s or more and 100°C/s or less;

heating the cold rolled steel sheet in a temperature range from the temperature T1 to a temperature T2 of 300°C or higher and 450°C or lower at an average heating rate of 2°C/s or more;

cooling the cold rolled steel sheet in a temperature range from the temperature T2 to a temperature T3 of (T2 - 150°C) or higher and (T2 - 30°C) or lower at an average cooling rate CR2 of 0.5°C/s or more;

cooling the cold rolled steel sheet in a temperature range from the temperature T3 to a temperature T4 of 150°C or higher and 350°C or lower and the temperature T3 or lower at an average cooling rate CR3 of 0.1°C/s or more, holding the cold rolled steel sheet in a temperature range from 150°C or higher and 350°C or lower and the temperature T4 or lower for 20 s or longer and 1000 s or shorter; and

cooling the cold rolled steel sheet to a temperature of 50°C or lower at an average cooling rate CR4 of 1°C/s or more.

[7] The method for producing a steel sheet described in [5], further including hot-dip-galvanizing or hot-dip-galvannealing the steel sheet after the steel sheet is cooled at the average cooling rate CR1 of 3°C/s or more and 100°C/s or less.

[8] The method for producing a steel sheet described in [6], further including hot-dip-galvanizing or hot-dip-galvannealing the steel sheet after the steel sheet is cooled at the average cooling rate CR7 of 3°C/s or more and 100°C/s or less.

[9] The method for producing a steel sheet described in [5] or [6], further including electrogalvanizing the steel sheet after the steel sheet is cooled at the average cooling rate CR4 of 1°C/s or more.

[10] A method for producing a member, the method including a step of preparing a member by subjecting the steel sheet described in any one of [1] to [3] to either or both of a forming process and a joining process.

Advantageous Effects of Invention

According to the present invention, a high-strength steel sheet that has a tensile strength (TS) of 780 MPa or more and excellent ductility, stretch flangeability, and axial crash properties can be obtained.

The steel sheet of the present invention has excellent axial crash properties and thus is suitable for use in energy-absorbing members.

When the steel sheet obtained in the present invention is applied to automotive parts, automobile weight is reduced and the fuel efficiency is expected to improve.

Brief Description of Drawings

[Fig. 1] Fig. 1 is a microstructure image of one example of the steel sheet of the present invention.

[Fig. 2] Fig. 2 is a diagram illustrating a method for producing the steel sheet of the present invention.

[Fig. 3] Fig. 3 is a diagram illustrating a method for calculating the VDA bend angle.

Description of Embodiments

The present invention will now be specifically described.

A steel sheet of the present invention has a chemical composition containing, in mass%, C: 0.10% or more and 0.30% or less, Si: 0.5% or more and 2.0% or less, Mn: 1.5% or more and 3.0% or less, P: 0.10% or less, S: 0.020% or less, sol. Al: 1.00% or less, N: 0.015% or less, and the balance being Fe and incidental impurities; and a steel microstructure containing, in area fractions, a microstructure composed of at least one of ferrite and bainitic ferrite: 10% or more and 60% or less, a microstructure composed of at least one of tempered martensite and lower bainite: 20% or more and 80% or less, retained austenite: 5% or more, and fresh martensite: 10% or less. The average C concentration in the retained austenite is 0.60 mass% or more. In a region within 100 $\mu$m from a steel sheet surface in a thickness direction, a content of Fe element present as carbides in the tempered martensite is 0.20 mass% or less on average.

First, the chemical composition of the steel sheet of the present invention is described. In the description below, "%" indicating the unit of the content of a component element means "mass%" unless clearly indicated otherwise.

[C: 0.10% or more and 0.30% or less]

C is necessary for securing the tempered martensite amount and securing the retained austenite amount stable at room temperature, and, furthermore, stabilizes retained austenite by concentrating in the retained austenite and is thus a necessary element for improving the ductility. At a C content of less than 0.10%, these effects are not sufficiently exhibited, and it becomes difficult to obtain strength and workability of the steel sheet. The C content thus needs to be 0.10% or more, and is preferably 0.12% or more and more preferably 0.15% or more.

Meanwhile, at a C content exceeding 0.30%, the number of carbides in the tempered martensite increases, and cracks occur from the carbides as starting points during bending deformation; thus, the axial crash properties are degraded, and the ductility is also degraded due to an excessive increase in strength. The C content thus needs to be 0.30% or less, and is preferably 0.28% or less and more preferably 0.25% or less.

[Si: 0.5% or more and 2.0% or less]

Si suppresses formation of carbides in martensite and bainite, accelerates formation of retained austenite, and is an element useful for improving the ductility and the axial crash properties by improving the stability of the retained austenite.

The Si content needs to be 0.5% or more, and is preferably 0.6% or more and more preferably 0.7% or more.

Meanwhile, at a Si content exceeding 2.0%, an excessive increase in strength degrades ductility and stretch flangeability, and, in addition, the rolling load may increase during hot rolling, liquid metal embrittlement cracking may occur when welded with a zinc-coated material, and the chemical convertibility may be degraded.

The Si content thus needs to be 2.0% or less, and is preferably 1.5% or less and more preferably 1.0% or less.

[Mn: 1.5% or more and 3.0% or less]

Mn is effective for securing the specified area fractions of tempered martensite and/or bainite and for securing the strength. Mn is also an important element for increasing the retained austenite area fraction and improving the ductility since Mn decreases the Ms temperature of the retained austenite and stabilizes the retained austenite. Thus, the Mn content needs to be 1.5% or more, and is preferably 1.8% or more and more preferably 2.0% or more.

Meanwhile, at a Mn content exceeding 3.0%, the strength increases excessively, bainite transformation delays extensively, and thus ductility is degraded. Moreover, the Mn segregation in the thickness direction becomes prominent, and there is a risk that the stability of the material quality would be degraded. The Mn content is thus 3.0% or less, and is preferably 2.8% or less and more preferably 2.5% or less.

[P: 0.10% or less]

P is an element that strengthen the steel, but a high P content degrades the spot weldability. Thus, the P content is 0.10% or less and is preferably 0.02% or less. It should be noted that P does not have to be contained but the P content is preferably 0.001% or more from the viewpoint of the production cost.

[S: 0.020% or less]

S is an element that has an effect of improving the descalability in hot rolling and an effect of suppressing nitriding during annealing, but also has extensive adverse effects on bendability, flangeability, and spot weldability. In order to mitigate these adverse effects, the S content is to be at least 0.020% or less. In the present invention, from the viewpoint of suppressing degradation of bendability and flangeability, the S content is preferably 0.0020% or less and more preferably less than 0.0010%. It should be noted that S does not have to be contained but the S content is preferably 0.0001% or more from the viewpoint of the production cost.
The S content is more preferably 0.0005% or more.

[sol. Al: 1.00% or less]

Al suppresses formation of carbides and is an element effective for accelerating formation of retained austenite. Moreover, Al is an element added as a deoxidizing agent in the steelmaking process. Thus, the lower limit of the sol. Al content is not particularly limited, but is preferably 0.005% or more and even more preferably 0.01% or more for achieving stable deoxidization.
Meanwhile, at a sol. Al content exceeding 1.00%, inclusions in the steel sheet increase, and the ductility is degraded. Thus, the sol. Al content is 1.00% or less and is preferably 0.50% or less. The sol. Al content is more preferably 0.25% or less and even more preferably 0.10% or less.

[N: 0.015% or less]

N is an element that forms nitrides such as BN, AlN, and TiN in the steel and is an element that degrades the hot ductility of the steel and the surface quality. Moreover, a steel containing B has a negative effect of canceling the effects of B through formation of BN. At a N content exceeding 0.015%, the surface quality is extensively degraded. Thus, the N content is 0.015% or less and is preferably 0.010% or less. The N content is more preferably 0.005% or less and even more preferably 0.002% or less.
It should be noted that N does not have to be contained but the N content is preferably 0.0001% or more and more preferably 0.001% or more from the viewpoint of the production cost.
The balance other than what is described above is Fe and incidental impurities. The steel sheet of the present invention preferably has a chemical composition that contains the aforementioned basic components and the balance being iron (Fe) and incidental impurities.
The chemical composition of the steel sheet of the present invention may contain the following optional elements as appropriate in addition to the aforementioned components.

[Ti: 0.100% or less, Nb: 0.100% or less, V: 0.100% or less]

Ti, Nb, and V form fine precipitates during hot rolling or annealing and thereby increase the strength. In order to obtain such an effect, the Ti content is preferably 0.010% or more, the Nb content is preferably 0.020% or more, and the V content is preferably 0.020% or more.
Meanwhile, when the Ti content, the Nb content, and the V content each exceed 0.100%, formability is degraded. Thus, when Ti, Nb, and V are to be added, each content is preferably 0.100% or less, more preferably 0.080% or less, and even more preferably 0.050% or less.

[B: 0.0050% or less]

B is an element that improves hardenability of the steel and has an advantage of facilitating formation of specified area fractions of tempered martensite and/or bainite. In order to obtain such an effect, the B content is preferably 0.0005% or more and even more preferably 0.0010% or more.
Meanwhile, at a B content exceeding 0.0050%, the effect thereof saturates, and the hot ductility is degraded extensively, resulting in surface defects. Thus, when B is to be added, the B content is preferably 0.0050% or less, more preferably 0.0040% or less, and even more preferably 0.0025% or less.

[Cr: 1.000% or less, Cu: 1.000% or less]

Cr and Cu not only serve as solid solution strengthening elements but also are elements that stabilize austenite and facilitate formation of a multi-phase microstructure during the cooling process in annealing. Thus, although Cr and Cu do not have to be contained, in order to obtain such effects, the Cr and Cu contents are each preferably 0.005% or more, more preferably 0.008% or more, and even more preferably 0.010% or more.

Meanwhile, at a Cr content and Cu content each exceeding 1.000%, formability of the steel sheet is degraded. Thus, when Cr and Cu are to be added, each content is preferably 1.000% or less, more preferably 0.800% or less, and even more preferably 0.400% or less. The Cr and Cu contents are each preferably 0.200% or less and more preferably 0.100% or less.

[Sb: 0.200% or less, Sn: 0.200% or less]

Sb and Sn are elements effective for suppressing decarburization in the region several tens of micrometers in the steel sheet surface layer formed by nitridation and oxidation of the steel sheet surface. When the nitridation and oxidation are suppressed, it becomes possible to prevent the amount of martensite in the steel sheet surface from decreasing and to secure the steel sheet strength and stability of the material quality. Thus, although Sb and Sn do not have to be added, but when Sb and Sn are to be added, the Sb and Sn contents are preferably each 0.002% or more, more preferably 0.004% or more, and even more preferably 0.006% or more.

Meanwhile, when these elements are each contained exceeding 0.200%, toughness is degraded. Thus, when Sb and Sn are to be added, the Sb content and the Sn content are each preferably 0.200% or less, more preferably 0.100% or less, and even more preferably 0.040% or less.

[Ta: 0.100% or less]

As with Ti and Nb, Ta forms alloy carbides and alloy carbonitrides and contributes to increasing the strength. In addition, it is considered that Ta has an effect of extensively suppressing coarsening of precipitates and an effect of stabilizing the contribution ratio to the steel sheet strength improvements by precipitation strengthening when Ta partly dissolves in the Nb carbides and Nb carbonitrides and forms complex precipitates such as (Nb,Ta) and (C,N). To obtain these effects, the Ta content is preferably 0.005% or more.

Meanwhile, excessive addition of Ta saturates the precipitate stabilizing effect and increases the alloying cost. Thus, when Ta is to be added, the Ta content is preferably 0.100% or less, more preferably 0.080% or less, and even more preferably 0.050% or less.

[Ca: 0.0050% or less, Mg: 0.0050% or less, REM: 0.0050% or less]

Ca, Mg, and REM are elements used in deoxidation, spheroidize the sulfides, and are elements effective for addressing adverse effects of the sulfides on the local ductility and the stretch flangeability. In order to obtain such effects, the Ca content is preferably 0.0001% or more, the Mg content is preferably 0.0001% or more, and the REM content is preferably 0.0001% or more.

Meanwhile, excessive addition of Ca, Mg, and REM exceeding 0.0050% induces the increase of inclusions etc., and causes defects and the like on the surface or in the inside. Thus, the Ca, Mg, and REM contents are each preferably 0.0050% or less, more preferably 0.0025% or less, and even more preferably 0.0010% or less.

The Ca content is more preferably 0.0008% or less.

The Mg content is more preferably 0.0008% or less.

The REM content is more preferably 0.0008% or less.

Here, REM in the present invention refers to scandium (Sc) having an atomic number 21, yttrium (Y) having an atonic number 39, and lanthanoids from lanthanum (La) having an atomic number 57 to lutetium (Lu) having an atomic number 71.

A REM content in the present invention is the total content of one or more of the elements selected from among the REMs described above. REM is not particularly limited but is preferably La and/or Ce.

When the aforementioned optional elements are contained in amounts lower than the preferable lower limit values, the optional elements contained in amount lower than the lower limit values do not impair the effects of the present invention. When the optional elements are contained in amounts lower than the lower limit values, the optional elements are considered incidental impurities.

Next, the steel microstructure (microstructure) of the present invention is described.

[Area fraction of microstructure composed of at least one of ferrite and bainitic ferrite: 10% or more and 60% or less]

Ferrite and bainitic ferrite formed during annealing and during the cooling process contribute to improving the ductility, and, in addition, contribute to stabilizing retained austenite by causing carbon to concentrate in the surrounding non-transformed austenite. This effect is obtained by adjusting the total area fraction of ferrite and bainitic ferrite to 10% or more.

Meanwhile, when the total area fraction of ferrite and bainitic ferrite exceeds 60%, the difference in hardness occurs relative to the surrounding hard phases such as martensite, cracks propagate from the interface with the hard phases during bending, and thus the stretch flangeability and the axial crash properties may be degraded. Thus, the area fraction of the microstructure composed of at least one of ferrite and bainitic ferrite is 10% or more and 60% or less. This area fraction is preferably 15% or more and more preferably 20% or more.

This area fraction is preferably 55% or less and more preferably 50% or less.

In addition, among ferrite and bainitic ferrite, the area fraction of the ferrite relative to the entire microstructure is preferably 15% or more, more preferably more than 15%, and even more preferably 20% or more. In addition, among ferrite and bainitic ferrite, the area fraction of the ferrite relative to the entire microstructure is preferably 40% or less and more preferably 30% or less.

[Area fraction of microstructure composed of at least one of tempered martensite and lower bainite: 20% or more and 80% or less]

In order to obtain specified strength and stretch flangeability, the total area fraction of tempered martensite and lower bainite is 20% or more. This total area fraction is preferably 30% or more and more preferably 40% or more. Meanwhile, when the total area fraction of tempered martensite and lower bainite exceeds 80%, the ductility is degraded due to the excessive increase in strength; thus, the total area fraction of tempered martensite and lower bainite is 80% or less. This total area fraction is preferably 70% or less and more preferably 60% or less.

[Retained austenite area fraction: 5% or more]

In order to secure high ductility, the retained austenite area fraction relative to the entire steel microstructure is 5% or more. The retained austenite area fraction is more preferably 7% or more and even more preferably 10% or more. This amount of retained austenite includes retained austenite present between bainitic ferrite. The area fraction of the retained austenite present between bainitic ferrite can be measured in the same manner as area fractions of other retained austenite according to the measurement method described below.

Meanwhile, when the amount of retained austenite increases excessively, the strength may decrease, and the stretch flangeability and the delayed fracture resistance may be degraded. Thus, although the upper limit of the retained austenite area fraction is not specified, the retained austenite area fraction is preferably 20% or less and more preferably 15% or less.

[Fresh martensite area fraction: 10% or less]

The fresh martensite area fraction is 10% or less, preferably 8% or less, and more preferably 5% or less since fresh martensite may cause degradation of ductility and stretch flangeability. The fresh martensite area fraction may be 0%.

Here, in order to obtain specified strength, ductility, stretch flangeability, and axial crash properties, tempered martensite, lower bainite, retained austenite, and fresh martensite preferably account for, in total, 60% or more of the remaining microstructure other than ferrite and bainitic ferrite described above.

[Average C concentration in retained austenite: 0.60 mass% or more]

Increasing the C concentration in retained austenite stabilizes the retained austenite and makes it possible to improve ductility. Thus, in order to obtain sufficient ductility, the average C concentration in the retained austenite is 0.60 mass% or more and is preferably 0.80 mass% or more.

The upper limit is not particularly limited, but when the average C concentration in the retained austenite is excessively increased, the retained austenite does not undergo transformation during deformation, and the ductility improving effect may not be sufficiently obtained; thus the average C concentration in the retained austenite is preferably 2.0 mass% or less and more preferably 1.5 mass% or less.

[In a region within 100 $\mu$m from a steel sheet surface in the thickness direction, a content of Fe element present as carbides in tempered martensite: 0.20 mass% or less on average]

Carbides that precipitate in tempered martensite act as starting points of cracks during bending deformation and cause degradation of axial crash properties. In addition, precipitation of carbides is a phenomenon that competes with carbon partitioning, and since carbon is consumed by precipitation of the carbides, concentration of carbon into non-transformed austenite may be inhibited. Thus, the content of the Fe element present as carbides in the tempered martensite is preferably 0.20 mass% or less and more preferably 0.15 mass% or less on average. Although the lower limit is not particularly specified, in the present invention, the content of the Fe element is substantially 0.001 mass% or more.

The steel microstructure of the present invention contains, as described above, ferrite, bainitic ferrite, tempered martensite, lower bainite, retained austenite, and fresh martensite (including 0%). The steel microstructure of the present invention may consist of include ferrite, bainitic ferrite, tempered martensite, lower bainite, retained austenite, and fresh martensite (including 0%).

Furthermore, the steel microstructure of the present invention may contain 5% or less of pearlite and cementite as phases other than those described above, and this does not impair the effects of the present invention.

Next, a method for measuring the steel microstructure is described.

The area fractions of the microstructure composed of at least one of ferrite and bainitic ferrite, the microstructure composed of at least one of tempered martensite and lower bainite, and a massive microstructure MA (the martensite austenite constituent) composed of fresh martensite and retained austenite described below are measured by cutting out a thickness section perpendicular to the steel sheet surface and parallel to the rolling direction, mirror-polishing the section, etching the mirror-polished section with a 3 vol% Nital, and observing ten 20 μm × 20 μm fields of view at a thickness 1/4 position by SEM at a magnification of 5000x.

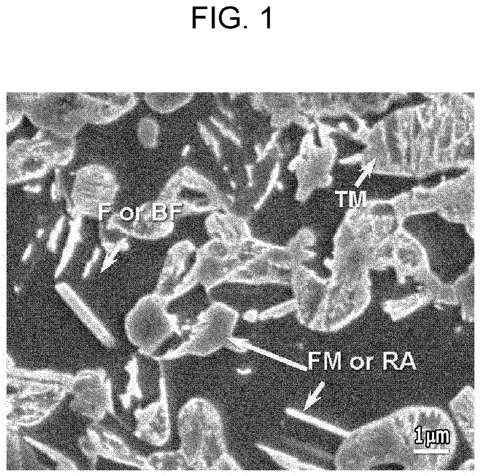

Fig. 1 illustrates one example of a SEM image of a steel microstructure of the steel sheet. As illustrated in Fig. 1, ferrite and bainitic ferrite (in Fig. 1, see reference signs F and BF) are a relatively equiaxed region where almost no carbides are found inside and which appears the darkest black in SEM. Tempered martensite (in Fig. 1, see reference sign TM) and lower bainite are a region where lath-like substructures and precipitated carbides are found inside by SEM. MA (fresh martensite and/or retained austenite) (Fig. 1, see reference signs FM and RA) is a massive region where no substructure is seen inside and which appears white by SEM.

The area fraction of retained austenite and the average C concentration in retained austenite are determined by grinding and polishing the steel sheet in the thickness direction down to a thickness 1/4 position and performing X-ray diffraction intensity measurement thereon. The volume fraction of retained austenite is calculated by using a Mo tubular radiation source from the intensity ratios of the (200), (220), and (311) planes of austenite relative to the diffraction intensities of the (200) and (211) planes of ferrite. The average C concentration in retained austenite is determined by using a Co tubular radiation source, determining the lattice constant A of austenite from the peak angle of the (220) plane of austenite, and calculating the concentration from equation (6) below. Note that, in the equation below, Mn%, Si%, and Al% each indicate mass% of the content of each element (Mn, Si, and Al) in the steel sheet.

Average C concentration in retained austenite (mass%) = A - {(0.3572 + 0.0012 × Mn% - 0.00157 × Si% + 0.0056 × Al%)/0.033 ⋯(equation 6)

The area fraction of fresh martensite (FM) is determined from equation (7) below, and is a value obtained by subtracting the area fraction of retained austenite (RA) from the area fraction of the aforementioned MA (fresh martensite and/or retained austenite).

In the present invention, the "area fraction" of RA (retained austenite) can be regarded as equivalent to the "volume fraction" of retained austenite determined by XRD measurement.

$$\mathrm{FM} \; (\%) \; = \; \mathrm{MA} \; (\%) \; - \; \mathrm{RA} \; (\%) \; \cdots (\mathrm{equation} \; 7)$$

In the region within 100 μm from the steel sheet surface in the thickness direction, the average content of the Fe element present as carbides in tempered martensite is determined by extracted residue analysis. A 10 mass% AA electrolyte (acetylacetone-1 mass% tetramethylammonium chloride-methanol) is used as the electrolyte, and electrolysis is performed under conditions of current density of 20 mA/cm$^2$ and an electrolysis time of 30 min to dissolve a region within 100 μm from the steel sheet surface. Subsequently, the specimen is immersed in methanol, the residue separated by ultrasonic agitation (precipitates that remain undissolved by electrolysis) is filtered out by using a filter having a 0.2 μm pore diameter, and the Fe element amount in the collected residue is determined by ICP atomic emission spectroscopy and is converted into a mass% in the steel sheet. Note that the collected residue is solely composed of precipitates that are present in the region within 100 μm from the steel sheet surface, and, here, the number of carbides outside the tempered martensite is significantly small (bainite, ferrite, etc.) compared with the number of carbides in the tempered martensite. Moreover, it is assumed that the Fe element does not exist as iron-based compounds other than carbon-based compounds. Thus, by the aforementioned measurement, the average content of the Fe element present as carbides in tempered martensite in the region within 100 μm from the steel sheet surface in the thickness direction is obtained.

The steel sheet of the present invention described heretofore may be a steel sheet that has a zinc coating layer on a steel sheet surface (one surface or both surfaces). The coating layer may be a hot-dip coating layer or an electroplating layer.

The thickness of the steel sheet of the present invention is preferably 0.5 mm or more. The thickness is preferably 2.0 mm or less.

Next, a method for producing the steel sheet of the present invention is described.

In the description below, the case where a retention treatment under specified conditions is not performed as the treatment that follows the annealing treatment is described as a first embodiment, and the case where the retention treatment under specified conditions is performed as the treatment that follows the annealing treatment is described as a second embodiment.

Here, temperatures specified in each step of the present invention are surface temperatures of slabs (steel slabs) or steel sheets.

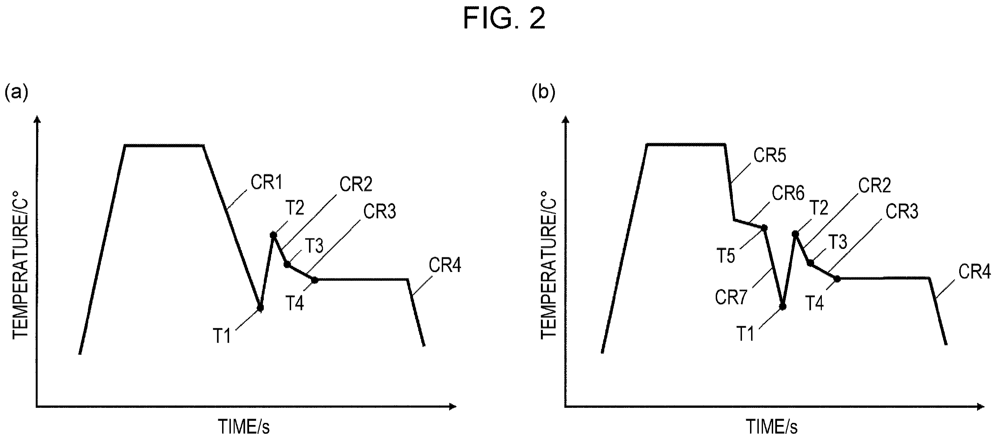

Fig. 2 is a diagram illustrating the method for producing the steel sheet of the present invention, in particular, changes with time in surface temperature of a slab (steel slab) or a steel sheet. Details of the individual steps including the changes with time in temperature will now be described. Fig. 2(a) illustrates the changes with time in surface temperature of the slab (steel slab) or the steel sheet in the method for producing the steel sheet according to the first embodiment (the case in which the retention treatment is not performed). Meanwhile, Fig. 2(b) illustrates the changes with time in surface temperature of the slab (steel slab) or the steel sheet in the method for producing the steel sheet according to the second embodiment (the case in which the retention treatment is performed).

<First embodiment>

As illustrated in Fig. 2(a), according to a method for producing a steel sheet according to the first embodiment of the present invention, a steel slab having the aforementioned chemical composition is hot-rolled and cold-rolled, and the obtained cold rolled steel sheet is subjected to an annealing treatment at an annealing temperature of 750°C or higher and $A_{c3}$ temperature (°C) or lower, is cooled at an average cooling rate CR1 of 3°C/s or more and 100°C/s or less in a range from the annealing temperature to a temperature T1 of 200°C or higher and (Ms temperature (°C) - 30°C) or lower, is heated at an average heating rate of 2°C/s or more in a temperature range from the temperature T1 to a temperature T2 of 300°C or higher and 450°C or lower, is cooled at an average cooling rate CR2 of 0.5°C/s or more in a temperature range from the temperature T2 to a temperature T3 of (T2 - 150°C) or higher and (T2 - 30°C) or lower, is cooled at an average cooling rate CR3 of 0.1°C/s or more in a temperature range from the temperature T3 to a temperature T4 of 150°C or higher and 350°C or lower and the temperature T3 or lower, is held in a temperature range of 150°C or higher and 350°C or lower and the temperature T4 or lower for 20 s or longer and 1000 s or shorter, and is cooled at an average cooling rate CR4 of 1°C/s or more to a temperature of 50°C or lower.

(Hot rolling step)

Hot rolling may be performed according to a standard method; for example, a steel slab having the aforementioned specified chemical composition may be heated to a slab heating temperature of 1100°C or higher, hot-rolled by setting the soaking time to 20 min or longer and a finish rolling delivery temperature to the $Ar_3$ transformation temperature or higher, and coiled at a coiling temperature of 400°C or higher.
The slab heating temperature may be 1300°C or lower. The soaking time may be 300 min or shorter. The finish rolling delivery temperature may be equal to or lower than $Ar_3$ transformation temperature + 200°C. The coiling temperature may be 720°C or lower.
The coiling temperature is preferably controlled from the viewpoints of suppressing the thickness variation and stably securing high strength. Specifically, the coiling temperature is preferably 430°C or higher. The coiling temperature is preferably 530°C or lower.

(Cold rolling step)

Cold rolling may be performed at a rolling reduction (cumulative rolling reduction) of 30% or more. The rolling reduction may be 85% or less. The rolling reduction is preferably controlled from the viewpoints of stably obtaining high strength and decreasing anisotropy. Specifically, the rolling reduction is preferably 35% or more. Note that when the rolling load is high, it is possible to perform an annealing treatment for softening in a continuous annealing line (CAL) or a box annealing furnace (BAF) at 450°C or higher and 730°C or lower.

(Annealing step)

The steel slab having the specified chemical composition is hot-rolled and cold-rolled and then annealed under the conditions specified below. The annealing facility is not particularly limited; however, from the viewpoints of productivity and achieving the desired heating rates and cooling rates, a continuous annealing line (CAL) or a continuous galvanizing line (CGL) is preferably used.

[Annealing treatment step: annealing temperature: 750°C or higher and A$_{c3}$ temperature (°C) or lower]

From the viewpoint of improving ductility, in order to secure specified area fractions of ferrite, bainitic ferrite, and tempered martensite, the annealing temperature is 750°C or higher and A$_{c3}$ temperature (°C) or lower. In order to adjust the total area fraction of ferrite and bainitic ferrite to 10% or more, the annealing temperature is preferably adjusted to A$_{c3}$ temperature or lower to achieve austenite + ferrite dual phase annealing. The annealing temperature is preferably (A$_{c3}$ temperature (°C) - 5°C) or lower and more preferably (A$_{c3}$ temperature (°C) - 10°C) or lower.

Meanwhile, when the annealing temperature is excessively decreases, ferrite and bainitic ferrite are excessively formed, the specified tempered martensite is not obtained, and the strength and stretch flangeability are degraded. In addition, at an annealing temperature lower than 750°C, sufficient recrystallization does not occur, and the hot rolled microstructure may be carried over such as presence of carbides that have been formed during hot rolling. Thus, the annealing temperature is 750°C or higher and the A$_{c3}$ temperature (°C) or lower.

The annealing temperature is preferably 755°C or higher and more preferably 760°C or higher.

Here, the A$_{c3}$ temperature can be determined by measuring the change in volume observed when a columnar test specimen (diameter of 3 mm × height of 10 mm) is heated from room temperature (25°C) to the austenite single-phase range by using a Formastor tester.

[First cooling treatment step: cooling at an average cooling rate CR1 of 3°C/s or more and 100°C/s or less in a range from the annealing temperature to a temperature T1 of 200°C or higher and (martensite transformation start temperature Ms (°C) - 30°C) or lower]

After the aforementioned annealing treatment, cooling must be rapidly performed in order to obtain the specified tempered martensite area fraction. When the average cooling rate CR1 in the temperature range from the annealing temperature to a temperature T1 (cooling stop temperature T1) of 200°C or higher and (martensite transformation start temperature Ms (°C) - 30°C) or lower is less than 3°C/s, ferrite is excessively formed during the cooling process, and this degrades strength, stretch flangeability, and axial crash properties.

Thus, from the viewpoint of controlling the amount of formed ferrite, the average cooling rate CR1 in the temperature range from the annealing temperature to a cooling stop temperature T1 of 200°C or higher and (Ms temperature (°C) - 30°C) or lower is 3°C/s or more. The average cooling rate CR1 is preferably 5°C/s or more and more preferably 8°C/s or more.

Meanwhile, at an excessively large average cooling rate CR1, the sheet shape is degraded; thus, the average cooling rate CR1 is 100°C/s or less. The average cooling rate CR1 is preferably 50°C/s or less.

Furthermore, in order to obtain the specified retained austenite amount, the temperature T1 (cooling stop temperature T1) is 200°C or higher. The temperature T1 (cooling stop temperature T1) is preferably 220°C or higher and more preferably 240°C or higher. At a cooling stop temperature T1 exceeding (Ms temperature (°C) - 30°C), a large amount of massive non-transformed austenite remains, the amount of fresh martensite in the final cooling increases, and the stretch flangeability is degraded. Thus, the cooling stop temperature T1 is (Ms temperature (°C) - 30°C) or lower. The cooling stop temperature T1 is preferably (Ms temperature (°C) - 35°C) or lower.

Here, the martensite transformation start temperature Ms (°C) can be determined with a Formastor tester by measuring the change in volume of a columnar test specimen, which is similar to the one used in measuring the A$_{c3}$ temperature, observed when the test specimen is held at a specified annealing temperature and then rapidly cooled with helium gas.

Here, the average cooling rate CR1 is "(annealing temperature (cooling start temperature) (°C) - (Ms temperature (°C) - 30°C) (cooling stop temperature (°C)))/(cooling time (s) from annealing temperature to (Ms temperature (°C) - 30°C))".

[Heat treatment step: heating at an average heating rate of 2°C/s or more from the temperature T1 to a temperature T2 of 300°C or higher and 450°C or lower]

When the temperature range from the aforementioned temperature T1 (cooling stop temperature T1: 200°C or higher and (martensite transformation start temperature Ms (°C) - 30°C) or lower) to a temperature T2 of 300°C or higher and 450°C or lower is heated in a short period of time, carbide precipitation can be suppressed, and, simultaneously, carbon from the surrounding microstructure can concentrate into the non-transformed austenite, and thus high ductility can be obtained. When the temperature T2 is lower than 300°C, carbon does not sufficiently concentrate into non-transformed austenite, tempering of martensite does not progress sufficiently, and tempered martensite exhibits an excessively increased strength; thus, such a temperature T2 is disadvantageous from the viewpoint of improving ductility and stretch flangeability.

Meanwhile, when the temperature T2 after heating exceeds 450°C, non-transformed austenite decomposes, and massive fresh martensite increases; thus, the ductility and stretch flangeability are degraded, carbides precipitate excessively, and the axial crash properties are degraded. Thus, the temperature T2 is 300°C or higher and 450°C or lower. The temperature T2 is preferably 330°C or higher and more preferably 350°C or higher. The temperature T2 is preferably 420°C or lower and more preferably 400°C or lower.

Furthermore, when the average heating rate from the temperature T1 to a temperature T2 of 300°C or higher and 450°C or lower is slow, the axial crash properties are degraded by the increase in the number of carbide precipitates, the concentrated carbon amount in retained austenite decreases with the increase in carbides, and thus the ductility is degraded in some cases. Thus, the average heating rate in the temperature range from the temperature T1 (cooling stop temperature T1) to a temperature T2 of 300°C or higher and 450°C or lower is 2°C/s or more. From the viewpoint of suppressing carbide precipitation, the average heating rate is preferably 5°C/s or more and more preferably 10°C/s or more. The upper limit of the average heating rate is not particularly limited but is preferably 50°C/s or less and more preferably 30°C/s or less.

Here, the average heating rate is "temperature T2 (heating stop temperature) (°C) - temperature T1 (heating start temperature) (°C))/(heating time (s) from temperature T1 to temperature T2)".

[Second cooling treatment step: cooling at an average cooling rate CR2 of 0.5°C/s or more in the temperature range from the temperature T2 to a temperature T3 of (T2 - 150°C) or higher and (T2 - 30°C) or lower]

[Third cooling treatment step: cooling at an average cooling rate CR3 of 0.1°C/s or more in the temperature range from the temperature T3 to a temperature T4 of 150°C or higher and 350°C or lower and the temperature T3 or lower]

In the overaging treatment step after the stop of cooling (from the aforementioned heat treatment step to the holding treatment step after the third cooling treatment step), fresh martensite turns into tempered martensite, and, with this transformation, precipitation of carbides and carbon partitioning to non-transformed austenite occur. The carbide precipitation rate tends to be slow as the heating temperature after the stop of cooling decreases; thus, it becomes possible to suppress carbide precipitation and improve the axial crash properties by rapid cooling at a particular cooling rate or more to a temperature range in which suppression of carbide precipitation is possible. Meanwhile, as the heating temperature after the stop of cooling decreases, concentration of carbon into the non-transformed austenite and tempering of fresh martensite are inhibited, and thus the strength may excessively increase and the ductility and stretch flangeability may be degraded. Thus, in order to simultaneously achieve excellent axial crash properties, ductility, and stretch flangeability by suppressing carbide precipitation by cooling to a specified temperature range and accelerating concentration of carbon in non-transformed austenite and tempering of fresh martensite, a second cooling treatment step that involves specified conditions is performed between the heat treatment step and the third cooling treatment step. Specifically, in order to obtain the aforementioned effects, the temperature T3 (cooling stop temperature T3) in the second cooling treatment step is (T2 - 150°C) or higher and (T2 - 30°C) or lower. The temperature T3 is preferably (T2 - 120°C) or higher and more preferably (T2 - 100°C) or higher. The temperature T3 is preferably (T2 - 50°C) or lower and more preferably (T2 - 70°C) or lower.

The average cooling rate CR2 is 0.5°C/s or more, preferably 0.6°C/s or more and more preferably 0.7°C/s or more. Although the upper limit is not particularly specified, a higher average cooling rate delays carbon partitioning to retained austenite and tempering of fresh martensite, and this tends to degrade ductility and stretch flangeability; thus, the average cooling rate CR2 is preferably 5°C/s or less.

Here, the average cooling rate CR2 is "(temperature T2 (°C) (cooling start temperature) - temperature T3 (°C) (cooling stop temperature))/(cooling time (s) from temperature T2 to temperature T3)".

After cooling to the temperature T3 as the second cooling treatment, in order to accelerate carbon partitioning simultaneously with suppression of carbide precipitation and to improve the carbon concentration in retained austenite and the retained austenite amount as the second cooling treatment, further cooling is performed as a third cooling treatment. During this process, when the cooling temperature is decreased, the carbon partitioning rate decreases, and carbon may not sufficiently concentrate to non-transformed austenite. Meanwhile, in response to the increase in cooling temperature and the decrease in average cooling rate, carbides precipitate during cooling and the axial crash properties are degraded. Thus, the temperature T4 is 150°C or higher and 350°C or lower. The temperature T4 is preferably 180°C or higher and more preferably 200°C or higher. In addition, the temperature T4 is preferably 300°C or lower and more preferably 250°C or lower.

The average cooling rate CR3 is 0.1°C/s or more, preferably 0.2°C/s or more, and more preferably 0.3°C/s or more. Although the upper limit is not particularly specified, from the viewpoint of sufficiently accelerating carbon partitioning to non-transformed austenite, the average cooling rate CR3 is preferably average cooling rate CR2 or less and 1°C/s or less.

Here, the average cooling rate CR3 is "(temperature T3 (°C) (cooling start temperature) - temperature T4 (°C) (cooling stop temperature))/(cooling time (s) from temperature T3 to temperature T4)".

[Holding treatment step: holding the temperature range from 150°C or higher and 350°C or lower and the temperature T4 or lower for 20 s or longer and 1000 s or shorter]

The holding temperature is the aforementioned temperature T4 or lower.

At a holding temperature of lower than 150°C, tempering of fresh martensite does not progress sufficiently, an excessive increase in strength occurs, and the concentrated carbon amount in the non-transformed austenite decreases; thus, such a holding temperature is disadvantageous from the viewpoint of improving ductility and stretch flangeability Meanwhile, at a holding temperature exceeding 350°C, the precipitation number of carbides increases, the axial crash properties are degraded, concentration of carbon in non-transformed austenite is impaired by the carbide precipitation, retained austenite decreases, and the ductility is degraded.

Thus, the holding temperature is 150°C or higher and 350°C or lower and the temperature T4 or lower. The holding temperature is preferably 180°C or higher and more preferably 200°C or higher. The holding temperature is preferably 300°C or lower and more preferably 250°C or lower.

Extending the holding time increases the concentrated carbon amount in non-transformed austenite, can stabilize retained austenite, and can improve the ductility. Meanwhile, shortening the holding time tends to decrease the precipitation number of carbides and improves the axial crash properties. Thus, the holding time is 20 s or longer and 1000 s or shorter. The holding time is preferably 100 s or longer and more preferably 200 s or longer. The holding time is preferably 700 s or shorter and more preferably 500 s or shorter.

In addition, it is possible to form a zinc coating layer on a steel sheet surface by performing a hot-dip galvanizing treatment and even an alloying treatment after the first cooling treatment step (after cooling at an average cooling rate CR1 of 3°C/s or more and 100°C/s or less), that is, before, after, or during any one of the steps from the heat treatment step of heating from the temperature T1 to the temperature T2 to the holding treatment step of holding the temperature at 150°C or higher and 350°C or lower. In such a case, the steel sheet is preferably dipped in a zinc coating bath at 440°C or higher and 500°C or lower to perform a hot-dip galvanizing treatment, and then the coating weight is preferably adjusted by gas wiping or the like. The galvanization preferably uses a zinc coating bath having an Al content of 0.10 mass% or more and 0.22 mass% or less. Moreover, an alloying treatment of the zinc coating can be performed after the hot-dip galvanizing treatment. The alloying treatment on the zinc coating is preferably performed in the temperature range of 470°C or higher and 590°C or lower, and heating to this temperature range does not impair the effects of the present invention and thus may be performed.

[Fourth cooling treatment step: cooling to a temperature of 50°C or lower at an average cooling rate CR4 of 1°C/s or more]

Subsequently, cooling is performed at an average cooling rate CR4 of 1°C/s or more from the holding end temperature (150°C or higher and 350°C or lower and the temperature T4 or lower) in the aforementioned holding treatment step to a temperature of 50°C or lower from the viewpoint of preventing softening caused by excessive tempering and degradation of the ductility caused by carbide precipitation. From the viewpoint of adjusting the surface roughness and stabilizing the press formability such as flattening the sheet shape and from the viewpoint of increasing the yield strength, the steel sheet may be skin-pass rolled. The skin-pass elongation is preferably 0.1% or more and 0.5% or less. Furthermore, the sheet shape can be flattened by using a leveler.

The average cooling rate CR4 from the aforementioned holding end temperature to a temperature of 50°C or lower is 1°C/s or more and preferably 5°C/s or more. In the present invention, the upper limit of the average cooling rate CR4 is not particularly specified; however, from the viewpoint of production and the viewpoint of suppressing transformation from retained austenite to fresh martensite, the average cooling rate CR4 is preferably 10°C/s or less.

Here, the average cooling rate CR4 is "(150°C or higher and 350°C or lower and temperature T4 (°C) or lower (holding end temperature (cooling start temperature)) - temperature of 50°C or lower (cooling stop temperature))/(cooling time (s) from holding end temperature to cooling stop temperature)".

From the viewpoint of improving stretch flangeability, after the aforementioned heat treatment or skin-pass rolling, a low-temperature heat treatment can be performed at 100 to 300°C for 30 s to 10 days. By this treatment, hydrogen that has penetrated the steel sheet during tempering of the martensite formed during the final cooling or skin-pass rolling and annealing is removed from the steel sheet. The low-temperature heat treatment can decrease hydrogen to less than 0.1 mass ppm.

In addition, electroplating can be performed. That is, the steel sheet may be electrogalvanized after the fourth cooling treatment step (after cooling at an average cooling rate CR4 of 1°C/s or more). From the viewpoint of decreasing hydrogen in the steel, the aforementioned low-temperature heat treatment is preferably performed after electroplating.

<Second embodiment>

As illustrated in Fig. 2(b), according to a method for producing a steel sheet according to the second embodiment of the present invention, a steel slab having the aforementioned chemical composition is hot-rolled and cold-rolled, and the obtained cold rolled steel sheet is subjected to an annealing treatment at an annealing temperature of 750°C or higher and $A_{c3}$ temperature (°C) or lower, is cooled at an average cooling rate CR5 of 5°C/s or more and 100°C/s or less in the temperature range from the annealing temperature to 500°C (pre-retention treatment first cooling treatment), is retained for 10 s or longer and 60 s or shorter at an average cooling rate CR6 of 10°C/s or less in the temperature range from 500°C to a retention stop temperature T5 of the Ms (°C) or higher (retention treatment), is cooled at an average cooling rate CR7 of 3°C/s or more and 100°C/s or less in a temperature range from the retention stop temperature T5 to a temperature T1 of 200°C or higher and (Ms temperature (°C) - 30°C) or lower (post-retention treatment first cooling treatment), is heated at an average heating rate of 2°C/s or more in a temperature range from the temperature T1 to a temperature T2 of 300°C or higher and 450°C or lower, is cooled at an average cooling rate CR2 of 0.5°C/s or more in a temperature range from the temperature T2 to a temperature T3 of (T2 - 150°C) or higher and (T2 - 30°C) or lower, is cooled at an average cooling rate CR3 of 0.1°C/s or more in a temperature range from the temperature T3 to a temperature T4 of 150°C or higher and 350°C or lower and the temperature T3 or lower, is held in a temperature range of 150°C or higher and 350°C or lower and the temperature T4 or lower for 20 s or longer and 1000 s or shorter, and is cooled at an average cooling rate CR4 of 1°C/s or more to a temperature of 50°C or lower.

In the second embodiment, hot rolling, cold rolling, and the annealing treatment can be performed under the same conditions as those in the first embodiment.
Furthermore, in the second embodiment, the treatment in the first cooling treatment step of the first embodiment is replaced by the pre-retention treatment first cooling treatment, the retention treatment, and the post-retention treatment first cooling treatment.
Furthermore, in the second embodiment, the heat treatment, the second cooling treatment, the third cooling treatment, the holding treatment, and the fourth cooling treatment after the post-retention treatment first cooling treatment can be performed under the same conditions as those of the heat treatment, the second cooling treatment, the third cooling treatment, the holding treatment, and the fourth cooling treatment of the first embodiment, respectively. In addition, the hot-dip galvanizing treatment in the second embodiment can be performed under the same conditions as those of the first embodiment except that, whereas the hot-dip galvanizing treatment is performed after the first cooling treatment step (after cooling at an average cooling rate CR1 of 3°C/s or more and 100°C/s or less) in the first embodiment, the hot-dip galvanizing treatment is performed after the post-retention treatment first cooling treatment (after cooling at an average cooling rate CR7 of 3°C/s or more and 100°C/s or less) in the second embodiment. Furthermore, in the second embodiment, other conditions including those of the low-temperature heat treatment after all of the heat treatments and the electroplating treatment can be the same as those of the first embodiment.
In this embodiment, the pre-retention treatment first cooling treatment, the retention treatment, and the post-retention treatment first cooling treatment are mainly described below.

[Pre-retention treatment first cooling treatment step: cooling at an average cooling rate CR5 of 5°C/s or more and 100°C/s or less in a temperature range from the annealing temperature to 500°C]
[Retention treatment: retaining at an average cooling rate CR6 of 10°C/s or less for 10 s or longer and 60 s or shorter in a temperature range from 500°C to a retention stop temperature T5 of the Ms temperature (°C) or higher and 320°C or higher]

By performing the retention treatment during cooling, a larger area fraction of bainitic ferrite is obtained, carbon concentrates into non-transformed austenite, the retained austenite becomes stable, and thus a steel sheet having more superior ductility can be obtained. Thus, from the viewpoint of increasing ductility, the retention treatment is preferably performed during cooling.

When the retention treatment is performed during cooling, first, the temperature range from the annealing temperature to 500°C is cooled at an average cooling rate CR5 of 5°C/s or more and 100°C/s or less.
When the average cooling rate CR5 is less than 5°C/s, a large amount of ferrite is formed, and the strength and $\lambda$ are degraded. The average cooling rate CR5 is preferably 8°C/s or more.
Meanwhile, at an excessively high average cooling rate CR5, the sheet shape is degraded; thus, the average cooling rate CR5 is 100°C/s or less, preferably 50°C/s or less, and more preferably less than 30°C/s.

Here, the average cooling rate CR5 is "(annealing temperature (cooling start temperature) (°C) - 500°C (cooling stop temperature))/cooling time (s) from annealing temperature to 500°C".

Next, the temperature range from 500°C to a retention stop temperature T5 of the martensite transformation start temperature Ms (°C) or higher and 320°C or higher is retained at an average cooling rate CR6 of 10°C/s or less for 10 s or longer and 60 s or shorter; in this manner, bainite transformation can be accelerated, and retained austenite having a high C concentration can be formed adjacent to the bainitic ferrite formed thereby. When the temperature range is lower than the Ms temperature (°C), martensite is formed preferentially, bainite transformation progresses excessively due to the swing back phenomenon, and the strength and the stretch flangeability are degraded. Meanwhile, when the aforementioned temperature range exceeds 500°C, the drive force of the bainite transformation decreases, and the bainite transformation amount decreases. Thus, the temperature range is the Ms temperature (°C) or higher and 320°C or higher and 500°C or lower. The aforementioned temperature range is preferably Ms temperature (°C) + 15°C or more and more preferably Ms (°C) + 30°C or more. The aforementioned temperature range is preferably 350°C or higher and more preferably 380°C or higher. Furthermore, the aforementioned temperature range is preferably 480°C or lower and more preferably 460°C or lower.

The bainite transformation amount decreases when the average cooling rate CR6 exceeds 10°C/s. Thus, the average cooling rate CR6 is 10°C/s or less. Furthermore, when the retention time is shorter than 10 s, the desired amount of bainitic ferrite is not obtained, and when the retention time is longer than 60 s, C concentrates into the massive non-transformed austenite from the bainitic ferrite, and the amount of remaining massive microstructure increases. Thus, the retention time is 10 s or longer and 60 s or shorter. From the viewpoint of securing bainitic ferrite and retained austenite, the retention time is preferably 20 s or longer. In addition, from the viewpoint of improving the stretch flangeability by decreasing the massive microstructure, the retention time is preferably 50 s or shorter.

Here, the average cooling rate CR6 is "(500°C (retention start temperature) (°C) - (retention stop temperature (°C) of Ms temperature (°C) or higher and 320°C or higher))/(retention time (s) from retention start temperature to retention stop temperature)".

[Post-retention treatment first cooling treatment step: cooling at an average cooling rate CR7 of 3°C/s or more and 100°C/s or less in a range from the retention stop temperature T5 to a temperature T1 of 200°C or higher and (martensite transformation start temperature Ms (°C) - 30°C) or lower]

After the aforementioned retention treatment, cooling must be rapidly performed in order to obtain the specified area fractions of tempered martensite and/or bainite. When the average cooling rate CR7 in the temperature range from the retention stop temperature T5 to a temperature T1 (cooling stop temperature T1) of 200°C or higher and (martensite transformation start temperature Ms (°C) - 30°C) or lower is less than 3°C/s, ferrite is formed during the cooling process, and this degrades the strength, stretch flangeability, and axial crash properties. Thus, from the viewpoint of suppressing formation of ferrite, the average cooling rate CR7 in the temperature range from the retention stop temperature T5 to the cooling stop temperature T1 of 200°C or higher and (Ms temperature (°C) - 30°C) or lower is 3°C/s or more. The average cooling rate CR7 is preferably 5°C/s or more and more preferably 8°C/s or more. Meanwhile, at an excessively large average cooling rate CR7, the sheet shape is degraded; thus, the average cooling rate CR7 is 100°C/s or less. The average cooling rate CR7 is preferably 50°C/s or less.

Furthermore, in order to obtain the specified retained austenite amount, the temperature T1 (cooling stop temperature T1) is 200°C or higher. The temperature T1 (cooling stop temperature T1) is preferably 220°C or higher and more preferably 240°C or higher. At a cooling stop temperature T1 exceeding (Ms temperature (°C) - 30°C), a large amount of massive non-transformed austenite remains, the amount of fresh martensite in the final cooling increases, and the stretch flangeability is degraded. Thus, the cooling stop temperature T1 is (Ms tempearture (°C) - 30°C) or lower. The cooling stop temperature T1 is preferably (Ms temperature (°C) - 35°C) or lower.

Here, the average cooling rate CR7 is "(retention stop temperature T5 (cooling start temperature) (°C) - (Ms temperature (°C) - 30°C) (cooling stop temperature (°C)))/(cooling time (s) from retention stop temperature T5 to cooling stop temperature)".

Next, a member and a production method therefor according to the present invention are described.

A member of the present invention is obtained by subjecting the steel sheet of the present invention to at least one of a forming process or a joining process. Furthermore, a method for producing a member according to the present invention includes a step of subjecting the steel sheet of the present invention to at least one of a forming process or a joining process to obtain a member.

The steel sheet of the present invention has a tensile strength of 780 MPa or more and has high ductility, excellent stretch flangeability, and excellent axial crash properties. Thus, the member obtained by using the steel sheet of the present invention also has a high strength and has high ductility, excellent stretch flangeability, and excellent axial crash properties compared with typical high-strength members. Furthermore, weight reduction is possible by using the member of the present invention. Thus, the member of the present invention is suitable for use in automotive frame parts. The member of the present invention includes a welded joint.

The forming process may involve a common processing method such as pressing without any limitation. The joining process may involve a common welding such as spot welding or arc welding, riveting, crimping, or the like without any limitation.

EXAMPLES

Cold rolled steel sheets having a thickness of 1.4 mm and chemical compositions indicated in Table 1 were treated under the annealing conditions indicated in Tables 2 and 3 to produce steel sheets of the present invention and steel sheets of comparative examples.
The cold rolled steel sheets were obtained by subjecting steel slabs having chemical compositions indicated in Table 1 to hot rolling (heating temperature: 1250°C, soaking time: 60 min, finish rolling delivery temperature: 1150°C, coiling temperature: 550°C) and cold rolling (rolling reduction (rolling cumulative reduction): 50%).
Table 2 indicates conditions that do not involve the retention treatment, and Table 3 indicates conditions that involve the retention treatment.
For some of the steel sheets (cold rolled steel sheets: CR), a hot-dip galvanizing treatment was performed in one of the steps after heating from the temperature T1 to holding a temperature of 150°C or higher and 350°C or lower to prepare hot-dip galvanized steel sheets (GI).
Here, the steel sheet was dipped in a zinc coating bath at 440°C or higher and 500°C or lower to perform a hot-dip galvanizing treatment, and then the coating weight was adjusted by gas wiping or the like. The hot-dip galvanization used a zinc coating bath having an Al content of 0.10% or more and 0.22% or less. Furthermore, some of the hot-dip galvanized steel sheets were alloyed after the hot-dip galvanizing treatment into hot-dip galvannealed steel sheets (GA). Here, the alloying treatment was conducted in the temperature range of 460°C or higher and 590°C or lower. Furthermore, some steel sheets (cold rolled steel sheets: CR) were electroplated into electrogalvanized steel sheets (EG).

[Table 1]

| Steel No. | Chemical composition (mass%) | | | | | | | | | | | | | | | | | | | $A_{c3}$ (°C) | Note |
|---|---|---|---|---|---|---|---|---|---|---|---|---|---|---|---|---|---|---|---|---|---|
| | C | Si | Mn | P | S | sol.Al | N | Ti | Nb | V | B | Cr | Cu | Sb | Sn | Ta | Ca | Mg | REM | | |
| A | 0.20 | 1.22 | 2.77 | 0.005 | 0.0001 | 0.030 | 0.0010 | - | - | - | - | - | - | - | - | - | - | - | - | 818 | Example |
| **B** | **0.32** | 0.73 | 2.38 | 0.008 | 0.0002 | 0.035 | 0.0008 | - | - | - | - | - | - | - | - | - | - | - | - | 785 | **Comparative Example** |
| **C** | **0.07** | 1.10 | 2.92 | 0.003 | 0.0005 | 0.025 | 0.0010 | - | - | - | - | - | - | - | - | - | - | - | - | 847 | **Comparative Example** |
| D | 0.16 | 1.92 | 2.83 | 0.008 | 0.0010 | 0.036 | 0.0008 | 0.021 | - | - | 0.0020 | - | - | - | - | - | 0.0007 | - | - | 890 | Example |
| **E** | 0.22 | 0.92 | **3.17** | 0.001 | 0.0004 | 0.035 | 0.0009 | - | - | - | - | - | - | - | - | - | - | - | - | 823 | **Comparative Example** |
| **F** | 0.15 | 0.95 | **1.38** | 0.002 | 0.0006 | 0.028 | 0.0011 | - | - | - | - | - | - | - | - | - | - | - | - | 895 | **Comparative Example** |
| G | 0.12 | 0.64 | 2.49 | 0.001 | 0.0008 | 0.033 | 0.0009 | 0.017 | 0.030 | - | 0.0014 | - | - | - | - | - | - | 0.0002 | 0.0005 | 849 | Example |
| H | 0.27 | 1.90 | 2.72 | 0.005 | 0.0002 | 0.026 | 0.0010 | - | - | 0.020 | - | - | - | - | 0.030 | 0.020 | - | - | - | 835 | Example |
| I | 0.14 | 0.78 | 1.70 | 0.004 | 0.0005 | 0.029 | 0.0011 | - | - | - | - | 0.040 | 0.020 | 0.010 | - | - | - | - | - | 890 | Example |
| **J** | 0.22 | **0.39** | 2.11 | 0.007 | 0.0007 | 0.036 | 0.0008 | - | - | - | - | - | - | - | - | - | - | - | - | 796 | **Comparative Example** |
| **K** | 0.17 | **2.15** | 2.22 | 0.005 | 0.0001 | 0.033 | 0.0011 | - | - | - | - | - | - | - | - | - | - | - | - | 886 | **Comparative Example** |
| **L** | 0.21 | 1.04 | 1.87 | 0.010 | **0.0224** | 0.027 | 0.0009 | - | - | - | - | - | - | - | - | - | - | - | - | 827 | **Comparative Example** |
| **M** | 0.16 | 0.67 | 2.05 | 0.005 | 0.0003 | **1.019** | 0.0009 | - | - | - | - | - | - | - | - | - | - | - | - | 910 | **Comparative Example** |

* The balance other than the chemical composition is Fe and incidental impurities.

[Table 2]

| No. | Steel No. | Heat treatment conditions | | | | | | | | | | | Coating conditions | | | | | Ms | Note |
|---|---|---|---|---|---|---|---|---|---|---|---|---|---|---|---|---|---|---|---|
| | | Annealing temperature (°C) | Average cooling rate CR1 (°C/s) | Temperature T1 (°C) | Average heating rate (°C/s) | Temperature T2 (°C) | Average cooling rate CR2 (°C/s) | Temperature T3 (°C) | Average cooling rate CR3 (°C/s) | Temperature T4 (°C) | Holding time (sec) | Average cooling rate CR4 (°C/s) | Coating type | Coating bath temperature (°C) | Al amount (%) | Alloying temperature (°C) | Timing of coating (*1) | (°C) | |
| 1 | A | 805 | 5 | 250 | 20 | **460** | 2 | 350 | 1 | 250 | 500 | 4 | CR | - | - | - | - | 347 | Comparative Example |
| 2 | A | 800 | 5 | 220 | 5 | 400 | 1.5 | 300 | 0.4 | 200 | 200 | 4 | CR | - | - | - | - | 333 | Example |
| 3 | A | 780 | 5 | 220 | 20 | **270** | 2 | 200 | 1 | 180 | 200 | 4 | CR | - | - | - | - | 291 | Comparative Example |
| 4 | A | 780 | 95 | 240 | 5 | 375 | 2 | 330 | 0.2 | 200 | 50 | 10 | CR | - | - | - | - | 291 | Example |
| 5 | A | 780 | 1 | 210 | 5 | 350 | 1.5 | 300 | 0.2 | 200 | 50 | 10 | CR | - | - | - | - | 291 | Comparative Example |
| 6 | B | 765 | 5 | 210 | 5 | 375 | 1.5 | 300 | 0.2 | 250 | 200 | 5 | CR | - | - | - | - | 298 | Comparative Example |
| 7 | **C** | 840 | 5 | 260 | 3 | 400 | 5 | 350 | 0.2 | 300 | 500 | 10 | GA | 450 | 0.20 | 500 | I | 377 | Comparative Example |
| 8 | D | 875 | 5 | **180** | 10 | 375 | 5 | 330 | 0.5 | 300 | 500 | 5 | GA | 450 | 0.20 | 500 | I | 361 | Comparative Example |
| 9 | D | 840 | 5 | 210 | 10 | 400 | 1.5 | 300 | 0.5 | 280 | 250 | 2 | GA | 480 | 0.20 | 550 | III | 344 | Example |
| 10 | D | 880 | 5 | 325 | 10 | 420 | 1 | 280 | 0.2 | 200 | 50 | 5 | GA | 450 | 0.20 | 550 | III | 370 | Example |
| 11 | D | 850 | 5 | **310** | 4 | 350 | 1.5 | 275 | 0.3 | 250 | 500 | 5 | GA | 450 | 0.20 | 480 | III | 330 | Comparative Example |
| 12 | D | 850 | 20 | 220 | 5 | 400 | 1 | 300 | 0.5 | 200 | 200 | 5 | GA | 480 | 0.20 | 580 | II | 330 | Example |
| 13 | E | 815 | 5 | 250 | 25 | 400 | 1.5 | 300 | 0.5 | 275 | 400 | 2 | GI | 460 | 0.15 | - | II | 329 | Comparative Example |

19

| No. | Steel No. | Heat treatment conditions | | | | | | | | | | | Coating conditions | | | | | Ms | Note |
|---|---|---|---|---|---|---|---|---|---|---|---|---|---|---|---|---|---|---|---|
| | | Annealing temperature (°C) | Average cooling rate CR1 (°C/s) | Temperature T1 (°C) | Average heating rate (°C/s) | Temperature T2 (°C) | Average cooling rate CR2 (°C/s) | Temperature T3 (°C) | Average cooling rate CR3 (°C/s) | Temperature T4 (°C) | Holding time (sec) | Average cooling rate CR4 (°C/s) | Coating type | Coating bath temperature (°C) | Al amount (%) | Alloying temperature (°C) | Timing of coating (*1) | Ms (°C) | Note |
| 14 | F | 835 | 4 | 210 | 25 | 375 | 3 | 300 | 0.5 | 250 | 400 | 2 | GI | 460 | 0.15 | - | II | 321 | **Comparative Example** |
| 15 | G | 830 | 4 | 240 | **1** | 410 | 3 | 350 | 0.5 | 240 | 200 | 5 | GI | 460 | 0.13 | - | II | 378 | **Comparative Example** |
| 16 | G | **850** | 5 | 270 | 25 | 440 | 3 | 300 | 0.3 | 250 | 200 | 5 | GI | 460 | 0.13 | - | I | 388 | **Comparative Example** |
| 17 | G | **740** | 5 | 250 | 5 | 400 | 1.5 | 300 | 0.3 | 220 | 300 | 5 | GI | 460 | 0.15 | - | I | 317 | **Comparative Example** |
| 18 | G | 790 | 10 | 250 | 4 | 350 | 1 | 250 | 2 | 200 | 300 | 2 | GI | 450 | 0.15 | - | III | 351 | Example |
| 19 | G | 805 | 10 | 280 | 4 | 420 | **0.1** | 370 | 2 | 300 | 50 | 2 | GI | 450 | 0.15 | - | III | 351 | **Comparative Example** |
| 20 | G | 800 | 10 | 260 | 4 | 350 | 1.5 | 250 | 2 | 240 | 500 | 2 | GI | 480 | 0.15 | - | III | 349 | Example |
| 21 | G | 810 | 10 | 300 | 4 | 400 | 0.7 | 300 | 0.3 | 180 | 100 | 4 | GI | 480 | 0.15 | - | I | 367 | Example |
| 22 | H | 780 | 10 | 220 | 10 | 400 | 0.7 | 300 | 0.2 | 200 | 900 | 2 | CR | - | - | - | - | 270 | Example |
| 23 | H | 800 | 5 | 240 | 10 | 400 | 0.7 | **240** | 0.2 | 200 | 50 | 2 | CR | - | - | - | - | 292 | **Comparative Example** |
| 24 | H | 805 | 25 | 240 | 3 | 440 | 1.5 | **420** | 1 | 300 | 500 | 10 | CR | - | - | - | - | 304 | **Comparative Example** |
| 25 | H | 810 | 25 | 230 | 15 | 425 | 10 | 375 | **0.03** | 325 | 200 | 10 | CR | - | - | - | - | 316 | **Comparative Example** |

(continued)

| No. | Steel No. | Heat treatment conditions | | | | | | | | | | | Coating conditions | | | | | Ms | Note |
|---|---|---|---|---|---|---|---|---|---|---|---|---|---|---|---|---|---|---|---|
| | | Annealing temperature (°C) | Average cooling rate CR1 (°C/s) | Temperature T1 (°C) | Average heating rate (°C/s) | Temperature T2 (°C) | Average cooling rate CR2 (°C/s) | Temperature T3 (°C) | Average cooling rate CR3 (°C/s) | Temperature T4 (°C) | Holding time (sec) | Average cooling rate CR4 (°C/s) | Coating type | Coating bath temperature (°C) | Al amount (%) | Alloying temperature (°C) | Timing of coating(*1) | (°C) | |
| 26 | - | 850 | 5 | 280 | 3 | 350 | 1.5 | 275 | 0.5 | **120** | 200 | 5 | CR | - | - | - | - | 351 | **Comparative Example** |
| 27 | - | 830 | 15 | 280 | 15 | 350 | 10 | 275 | 5 | 170 | 500 | 2 | EG | 470 | 0.13 | - | II | 351 | **Example** |
| 28 | - | 840 | 5 | 300 | 15 | 325 | 10 | 275 | 2 | 250 | 500 | 2 | EG | 480 | 0.13 | - | II | 364 | **Example** |
| 29 | - | 850 | 5 | 300 | 5 | 400 | 1.5 | 350 | 1 | 330 | 500 | 3 | EG | 490 | 0.17 | - | II | 375 | **Example** |
| 30 | - | 860 | 15 | 310 | 5 | 440 | 1 | 400 | 0.2 | **370** | 400 | 3 | EG | 490 | 0.17 | - | I | 385 | **Comparative Example** |
| 31 | - | 850 | 5 | 300 | 5 | 375 | 1.5 | 300 | 0.5 | 275 | **10** | 3 | CR | - | - | - | - | 375 | **Comparative Example** |
| 32 | - | 850 | 5 | 300 | 5 | 350 | 1.5 | 300 | 0.5 | 275 | **1100** | 2 | CR | - | - | - | - | 375 | **Comparative Example** |
| 33 | **J** | 775 | 15 | 250 | 5 | 400 | 10 | 350 | 3 | 200 | 500 | 2 | EG | 480 | 0.13 | - | III | 352 | **Comparative Example** |
| 34 | **K** | 850 | 5 | 250 | 5 | 400 | 1 | 300 | 2 | 250 | 500 | 2 | CR | - | - | - | - | 356 | **Comparative Example** |
| 35 | G | 790 | 15 | 270 | 10 | 400 | 10 | 300 | 1 | 200 | 300 | **0.1** | CR | - | - | - | - | 351 | **Comparative Example** |
| 36 | **L** | 780 | 10 | 280 | 20 | 370 | 5 | 250 | 5 | 180 | 400 | 10 | CR | - | - | - | - | 369 | **Comparative Example** |

(continued)

| No. | Steel No. | Heat treatment conditions | | | | | | | | | | | Coating conditions | | | | | Ms | Note |
|---|---|---|---|---|---|---|---|---|---|---|---|---|---|---|---|---|---|---|---|
| | | Annealing temperature (°C) | Average cooling rate CR1 (°C/s) | Temperature T1 (°C) | Average heating rate (°C/s) | Temperature T2 (°C) | Average cooling rate CR2 (°C/s) | Temperature T3 (°C) | Average cooling rate CR3 (°C/s) | Temperature T4 (°C) | Holding time (sec) | Average cooling rate CR4 (°C/s) | Coating type | Coating bath temperature (°C) | Al amount (%) | Alloying temperature (°C) | Timing of coating (*1) | (°C) | |
| 37 | M | 890 | 10 | 240 | 20 | 350 | 1 | 250 | 1 | 200 | 200 | 10 | CR | - | - | - | - | 391 | **Comparative Example** |

(*1) Timing of coating: I: Immediately after heating to temperature T1, II: Immediately before holding the temperature range of 150 to 350°C, III: Immediately after holding the temperature range of 150 to 350°C.

[Table 3]

| No. | Steel No | Annealing temperature (°C) | Heat treatment conditions | | | | | | | | | | | | | | | Coating conditions | | | | | Ms (°C) | Note |
|---|---|---|---|---|---|---|---|---|---|---|---|---|---|---|---|---|---|---|---|---|---|---|---|---|
| | | | Average cooling rate CR5 (°C/s) | Average cooling rate CR6 (°C/s) | Retention time (sec) | Retention stop temperature T5 (°C) | Average cooling rate CR7 (°C/s) | Temperature T1 (°C) | Average heating rate (°C/s) | Temperature T2 (°C) | Average cooling rate CR2 (°C/s) | Temperature T3 (°C) | Average cooling rate CR3 (°C/s) | Temperature T4 (°C) | Holding time (sec) | Average cooling rate CR4 (°C/s) | Coating type | Coating bath temperature (°C) | Al amount (%) | Alloying Temperature (°C) | Timing of coating (*1) | | |
| 38 | A | 800 | 10 | 2 | 50 | 450 | 5 | 220 | 5 | 400 | 1.5 | 300 | 0.5 | 250 | 200 | 5 | CR | - | - | - | - | 333 | Example |
| 39 | D | 875 | 10 | 5 | 20 | 350 | 10 | 270 | 10 | 350 | 1.5 | 300 | 2 | 200 | 500 | 10 | GA | 450 | 0.20 | 570 | I | 344 | Example |
| 40 | G | 790 | 5 | 2 | 50 | 400 | 20 | 230 | 10 | 400 | 1.5 | 350 | 1 | 250 | 300 | 10 | GI | 480 | 0.15 | - | II | 292 | Example |

(*1) Timing of coating: I: Immediately after heating to temperature T1, II: Immediately before holding the temperature range of 150 to 350°C, III: Immediately after holding the temperature range of 150 to 350°C.

The steel microstructure was measured by the aforementioned method. The measurement results are shown in Tables 4 and 5.
Table 4 indicates conditions that do not involve the retention treatment, and Table 5 indicates conditions that involve the retention treatment.

(Tensile strength, ductility)

From each of the obtained steel sheets, a JIS No. 5 test piece for tensile test and a test piece for hole expansion test were taken and subjected to a tensile test (according to JIS Z 2241 (2011)). The tensile strength TS and the uniform elongation U-El are indicated in Tables 4 and 5.
Samples with a tensile strength of 780 MPa or more were determined as having excellent strength.
Furthermore, for the uniform elongation U-El, samples having a U-El of 16.0% or more with TS of less than 980 MPa, samples having a U-El of 11.0% or more with TS of 980 MPa or more and less than 1180 MPa, and samples having a U-El of 8.0% or more with TS of 1180 MPa or more were determined as having excellent ductility.

(Stretch flangeability)

The stretch flangeability was evaluated by a hole expansion test according to the Japan Iron and Steel Federation Standard, JFS T1001. That is, after a 100 mm × 100 mm square sample was punched with a punching tool having a punch diameter of 10 mm and a die diameter of 10.3 mm (13% clearance), the sample was arranged such that the burr, which had been formed by making the hole by punching, to face outward, and the hole was expanded with a conical punch having a 60 degree apex angle until cracks that penetrated through the thickness occurred. The hole expansion ratio was determined as hole expansion ratio $\lambda$ (%) = $\{(d - d_0)/d_0\} \times 100$ where d0 was the initial hole diameter (mm) and d was the hole diameter (mm) at the time cracks occurred during this process. The hole expansion ratios $\lambda$ are indicated in Tables 4 and 5.
Steel sheets having $\lambda$ of 30% or more were determined as having excellent stretch flangeability.

(Axial crash properties)

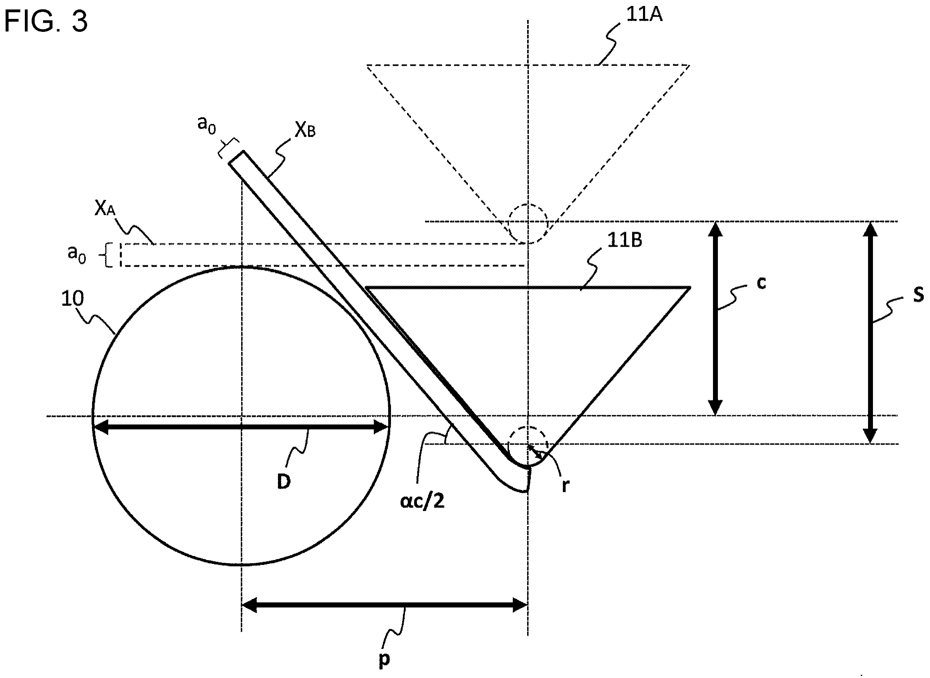

Fig. 3 is a diagram illustrating a method for calculating the VDA bend angle.
As illustrated in Fig. 3, the VDA bend angle $\alpha$ was evaluated as the evaluation of the axial crash properties by a bending test (Verband der Automobilindustrie: VDA bending test) according to VDA standards (VDA238-100) standardized by the German Association of the Automotive Industry. The VDA bending test is a bending test (Verband der Automobilindustrie: VDA bending test) according to VDA standards (VDA238-100) standardized by the German Association of the Automotive Industry, and is a 3-point bending test characterized by rollers 10 with extremely narrow roller spacing and a sharp punch 11. In the VDA bending test, a 60 mm × 60 mm square test specimen was used, the bending ridge direction was set to be parallel to the rolling direction, and the test specimen was supported by rollers with a roller diameter D of 30 mm and a roller-to-roller distance L (not illustrated) of (thickness $a_0 \times 2$) + 0.5 mm and was pushed from above with a punch having a tip r of 0.4 mm at a stroke rate of 20 mm/min (in the drawing, reference sign 11A denotes the punch before pushing and reference sign 11B denotes the punch after pushing). Here, in Fig. 3, for the sake of convenience, only one side of the test specimen (steel sheets $X_A$ and $X_B$) and the roller 10 is illustrated since this can be illustrated line-symmetrically with respect to the push axis as the center.
The VDA bend angle $\alpha$ is an angle (°) calculated by using equations (1) to (5) from the stroke S (mm) under the maximum load in the aforementioned bending test, and can be used as an indicator of the axial crash properties.
Steel sheets having $\alpha$ of 70° or more were determined as having excellent axial crash properties.

$$c \ (mm) = D/2 + r + a_0 \ \cdots (equation \ 1)$$

$$p \ (mm) = D/2 + L/2 \ \cdots (equation \ 2)$$

[Math. 4]

$$W \ (mm) = \sqrt{p^2 + (S-c)^2 - c^2} \quad \cdots (\text{equation 3})$$

[Math. 5]

$$\sin \frac{\alpha c}{2} = \frac{p \times c + W \times (S-c)}{p^2 + (S-c)^2} \quad \cdots (\text{equation 4})$$

[Math. 6]

$$\cos \frac{\alpha c}{2} = \frac{W \times p - c \times (S-c)}{p^2 + (S-c)^2} \quad \cdots (\text{equation 5})$$

[Table 4]

| No. | Steel No. | Microstructure | | | | | | | Mechanical properties | | | | Note |
|---|---|---|---|---|---|---|---|---|---|---|---|---|---|
| | | Ferrite + bainitic ferrite area fraction (%) | Tempered martensite + lower bainite area fraction (%) | Fresh martensite + retained $\gamma$ area fraction (%) | Fresh martensite area fraction (%) | Retained $\gamma$ area fraction (%) | Average C concentration in $\gamma$ (mass%) | Fe content as $Fe_3C$ (*1) (mass%) | TS (MPa) | U-El (%) | $\lambda$ (%) | $\alpha$ (°) | |
| 1 | A | 19 | 62 | 19 | **12** | 7 | 0.84 | **0.37** | 1225 | **7.2** | 28 | **62** | Comparative Example |
| 2 | A | 24 | 63 | 13 | 4 | 9 | 0.82 | 0.10 | 1198 | 8.3 | 35 | 72 | Example |
| 3 | A | 44 | 44 | 12 | 8 | **4** | **0.51** | 0.03 | 1124 | **7.4** | **27** | 75 | Comparative Example |
| 4 | A | 40 | 47 | 13 | 5 | 8 | 1.06 | 0.03 | 1067 | 11.3 | 35 | 73 | Example |
| 5 | A | **67** | **7** | 26 | **15** | 11 | 1.25 | 0.01 | **715** | **15.4** | **27** | **65** | Comparative Example |
| 6 | **B** | 31 | 44 | 25 | **17** | 8 | 0.95 | **0.47** | 1374 | **5.3** | **24** | **62** | Comparative Example |
| 7 | **C** | 21 | 74 | 5 | 1 | **4** | **0.54** | 0.01 | 1013 | **10.2** | 67 | 92 | Comparative Example |
| 8 | D | 12 | **82** | 6 | 2 | **4** | 0.62 | 0.01 | 1189 | **5.9** | 43 | 72 | Comparative Example |
| 9 | D | 48 | 31 | 21 | 7 | 14 | 1.20 | 0.02 | 1006 | 13.5 | 40 | 75 | Example |
| 10 | D | 19 | 63 | 18 | 9 | 9 | 0.76 | 0.01 | 1187 | 8.9 | 44 | 77 | Example |
| 11 | D | 42 | 32 | 26 | **14** | 12 | 0.68 | 0.01 | 1058 | **9.6** | **27** | **54** | Comparative Example |
| 12 | D | 39 | 46 | 15 | 5 | 10 | 0.79 | 0.02 | 1075 | 12.1 | 32 | 71 | Example |
| 13 | E | **9** | 79 | 12 | 3 | 9 | 0.84 | 0.14 | 1240 | **6.8** | 54 | 92 | Comparative Example |
| 14 | F | **62** | **19** | 19 | **15** | **4** | 1.21 | 0.04 | **758** | **15.7** | **24** | 67 | Comparative Example |
| 15 | G | 18 | 73 | 9 | 6 | **3** | 0.92 | **0.25** | 994 | **10.8** | 50 | **65** | Comparative Example |

EP 4 660 347 A1

(continued)

| No. | Steel No. | Microstructure | | | | | | | Mechanical properties | | | | Note |
| | | Ferrite + bainitic ferrite area fraction (%) | Tempered martensite + lower bainite area fraction (%) | Fresh martensite + retained γ area fraction (%) | Fresh martensite area fraction (%) | Retained γ area fraction (%) | Average C concentration in γ (mass%) | Fe content as Fe₃C (*1) (mass%) | TS (MPa) | U-El (%) | λ (%) | α (°) | |
|---|---|---|---|---|---|---|---|---|---|---|---|---|---|
| 16 | G | 7 | 79 | 14 | 8 | 6 | 0.88 | 0.16 | 1075 | **9.9** | 41 | 81 | Comparative Example |
| 17 | G | **64** | **12** | 24 | **14** | 10 | 1.02 | 0.04 | **765** | **15.0** | **21** | **64** | Comparative Example |
| 18 | G | 49 | 33 | 18 | 8 | 10 | 0.91 | 0.03 | 824 | 17.0 | 33 | 71 | Example |
| 19 | G | 28 | 54 | 18 | **11** | 7 | 0.82 | **0.25** | 936 | **14.8** | **26** | **67** | Comparative Example |
| 20 | G | 34 | 58 | 8 | 2 | 6 | 0.62 | 0.10 | 912 | 16.2 | 40 | 72 | Example |
| 21 | G | 20 | 68 | 12 | 6 | 6 | 0.66 | 0.12 | 986 | 13.2 | 48 | 76 | Example |
| 22 | H | 47 | 38 | 15 | 6 | 9 | 0.82 | 0.15 | 1220 | 8.2 | 31 | 74 | Example |
| 23 | H | 44 | 45 | 11 | 7 | **4** | **0.53** | 0.09 | 1297 | **4.3** | 32 | 72 | Comparative Example |
| 24 | H | 33 | 54 | 13 | 9 | **4** | 0.85 | **0.46** | 1301 | **4.9** | 39 | **59** | Comparative Example |
| 25 | H | 24 | 66 | 10 | 4 | 6 | 0.79 | **0.34** | 1310 | **5.6** | 35 | **65** | Comparative Example |
| 26 | I | 38 | 50 | 12 | 4 | 8 | **0.50** | 0.01 | 1103 | **10.2** | 29 | 82 | Comparative Example |
| 27 | I | 55 | 28 | 17 | 5 | 12 | 0.72 | 0.05 | 1054 | 12.2 | 35 | 72 | Example |
| 28 | I | 48 | 38 | 14 | 4 | 10 | 0.65 | 0.03 | 1113 | 11.9 | 36 | 75 | Example |
| 29 | I | 38 | 48 | 14 | 6 | 8 | 0.81 | 0.12 | 1078 | 11.7 | 41 | 81 | Example |
| 30 | I | 32 | 56 | 12 | 6 | 6 | 0.90 | **0.40** | 1129 | **10.5** | 48 | **68** | Comparative Example |

(continued)

| No. | Steel No. | Microstructure | | | | | | | Mechanical properties | | | | Note |
|---|---|---|---|---|---|---|---|---|---|---|---|---|---|
| | | Ferrite + bainitic ferrite area fraction (%) | Tempered martensite + lower bainite area fraction (%) | Fresh martensite + retained $\gamma$ area fraction (%) | Fresh martensite area fraction (%) | Retained $\gamma$ area fraction (%) | Average C concentration in $\gamma$ (mass%) | Fe content as $Fe_3C$ (*1) (mass%) | TS (MPa) | U-El (%) | $\lambda$ (%) | $\alpha$ (°) | |
| <u>31</u> | I | 37 | 54 | 9 | 5 | **<u>4</u>** | **<u>0.52</u>** | 0.05 | 1153 | **<u>10.3</u>** | 40 | 78 | Comparative Example |
| <u>32</u> | I | 35 | 52 | 13 | 6 | 7 | 0.95 | **<u>0.44</u>** | 1006 | 11.2 | 42 | <u>54</u> | Comparative Example |
| <u>33</u> | <u>J</u> | 29 | 63 | 8 | 4 | **<u>4</u>** | **<u>0.50</u>** | <u>0.37</u> | 1240 | **<u>5.4</u>** | 52 | <u>66</u> | Comparative Example |
| 34 | <u>K</u> | 31 | 28 | 41 | <u>32</u> | 9 | 0.86 | 0.04 | 1199 | **<u>7.1</u>** | <u>28</u> | <u>68</u> | Comparative Example |
| <u>35</u> | G | 45 | 34 | 21 | 9 | 12 | 0.74 | **<u>0.22</u>** | **771** | 17.3 | 31 | <u>67</u> | Comparative Example |
| <u>36</u> | L | 42 | 38 | 20 | 8 | 12 | 0.85 | 0.08 | 1234 | 12.4 | <u>21</u> | 74 | Comparative Example |
| 37 | <u>M</u> | 31 | 58 | 11 | 4 | 7 | 0.75 | 0.17 | 1071 | **<u>10.4</u>** | 35 | 75 | Comparative Example |

(*1) Fe content as $Fe_3C$: The average content of Fe element present as carbides in tempered martensite in a region within 100 $\mu$m from the steel sheet surface in the thickness direction.

[Table 5]

| No. | Steel No. | Microstructure | | | | | | | Mechanical properties | | | | Note |
|---|---|---|---|---|---|---|---|---|---|---|---|---|---|
| | | Ferrite + bainitic ferrite area fraction (%) | Tempered martensite + lower bainite area fraction (%) | Fresh martensite + retained γ area fraction (%) | Fresh martensite area fraction (%) | Retained γ area fraction (%) | Average C concentration in γ (mass%) | Fe content as Fe₃C (*1) (mass%) | TS (MPa) | U-El (%) | λ (%) | α (°) | |
| 38 | A | 30 | 56 | 14 | 5 | 9 | 0.85 | 0.06 | 1014 | 11.5 | 33 | 72 | Example |
| 39 | D | 19 | 61 | 20 | 8 | 12 | 0.81 | 0.02 | 1184 | 9.6 | 40 | 75 | Example |
| 40 | G | 50 | 32 | 18 | 6 | 12 | 0.82 | 0.15 | 796 | 17.7 | 32 | 71 | Example |

(*1) Fe content as Fe$_3$C: The average content of Fe element present as carbides in tempered martensite in a region within 100 μm from the steel sheet surface in the thickness direction.

Examples of the present invention indicated in Tables 4 and 5 satisfy U-El 16.0% or more for a TS of 780 MPa or more and less than 980 MPa, U-El of 11.0% or more for a TS of 980 MPa or more and less than 1180 MPa, and U-El of 8.0% or more for a TS of 1180 MPa or more, and satisfy $\lambda$ of 30% or more; furthermore, $\alpha$ is 70° or more, and the strength, ductility, stretch flangeability, and axial crash properties are excellent. In contrast, at least one of these properties are not satisfied in the comparative examples.

Furthermore, it was found that a member obtained by forming a steel sheet of the example of the present invention, a member obtained by joining the steel sheet, and a member obtained by forming and joining the steel sheet had high strength, high ductility, excellent stretch flangeability, and excellent axial crash properties as with the steel sheet of the example of the present invention since the steel sheet of the example of the present invention had high strength, high ductility, excellent stretch flangeability, and excellent axial crash properties.

Industrial Applicability

The present invention enables production of a steel sheet that has excellent ductility, stretch flangeability, and axial crash properties, that is used in members of automobiles and home electric appliances, and that is particularly suitable for use in energy-absorbing members of automobiles, and such a steel sheet is suitable for press-forming of these members.

Reference Signs List

F      ferrite
BF     bainitic ferrite
TM    tempered martensite
FM    fresh martensite
RA    retained austenite
$\alpha$     VDA bend angle
10    roller
D     roller diameter
11    punch
11A   punch before pushing
11B   punch after pushing
S     stroke
r      radius of curvature at tip
$X_A$   steel sheet before pushing
$X_B$   steel sheet after pushing
$a_0$   thickness

**Claims**

1. A steel sheet comprising:

a chemical composition containing, in mass%,

C: 0.10% or more and 0.30% or less,
Si: 0.5% or more and 2.0% or less,
Mn: 1.5% or more and 3.0% or less,
P: 0.10% or less,
S: 0.020% or less,
sol. Al: 1.00% or less,
N: 0.015% or less, and
the balance being Fe and incidental impurities; and

a steel microstructure containing, in area fractions, a microstructure composed of at least one of ferrite and bainitic ferrite: 10% or more and 60% or less, a microstructure composed of at least one of tempered martensite and lower bainite: 20% or more and 80% or less, retained austenite: 5% or more, and fresh martensite: 10% or less, wherein:

an average C concentration in the retained austenite is 0.60 mass% or more, and

in a region within 100 $\mu$m from a steel sheet surface in a thickness direction, a content of Fe element present as carbides in the tempered martensite is 0.20 mass% or less on average.

2.  The steel sheet according to Claim 1, wherein the chemical composition further contains, in mass%, at least one element selected from

    Ti: 0.100% or less,
    Nb: 0.100% or less,
    V: 0.100% or less,
    B: 0.0050% or less,
    Cr: 1.000% or less,
    Cu: 1.000% or less,
    Sb: 0.200% or less,
    Sn: 0.200% or less,
    Ta: 0.100% or less,
    Ca: 0.0050% or less,
    Mg: 0.0050% or less, and
    REM: 0.0050% or less.

3.  The steel sheet according to Claim 1 or 2, comprising a zinc coating layer on the steel sheet surface.

4.  A member comprising the steel sheet according to any one of Claims 1 to 3.

5.  A method for producing a steel sheet, the method comprising:

    hot-rolling and cold-rolling a steel slab having the chemical composition according to Claim 1 or 2 to obtain a cold rolled sheet;

    then subjecting the cold rolled steel sheet to an annealing treatment at an annealing temperature of 750°C or higher and an $A_{c3}$ temperature (°C) or lower;

    then cooling the cold rolled steel sheet in a range from the annealing temperature to a temperature T1 of 200°C or higher and (Ms temperature (°C) - 30°C) or lower at an average cooling rate CR1 of 3°C/s or more and 100°C/s or less;

    heating the cold rolled steel sheet in a temperature range from the temperature T1 to a temperature T2 of 300°C or higher and 450°C or lower at an average heating rate of 2°C/s or more;

    cooling the cold rolled steel sheet in a temperature range from the temperature T2 to a temperature T3 of (T2 - 150°C) or higher and (T2 - 30°C) or lower at an average cooling rate CR2 of 0.5°C/s or more;

    cooling the cold rolled steel sheet in a temperature range from the temperature T3 to a temperature T4 of 150°C or higher and 350°C or lower and the temperature T3 or lower at an average cooling rate CR3 of 0.1°C/s or more;

    holding the cold rolled steel sheet in a temperature range from 150°C or higher and 350°C or lower and the temperature T4 or lower for 20 s or longer and 1000 s or shorter; and

    cooling the cold rolled steel sheet to a temperature of 50°C or lower at an average cooling rate CR4 of 1°C/s or more.

6.  A method for producing a steel sheet, the method comprising:

    hot-rolling and cold-rolling a steel slab having the chemical composition according to Claim 1 or 2 to obtain a cold rolled sheet;

    then subjecting the cold rolled steel sheet to an annealing treatment at an annealing temperature of 750°C or higher and an $A_{c3}$ temperature (°C) or lower;

    then cooling the cold rolled steel sheet in a temperature range from the annealing temperature to 500°C at an average cooling rate CR5 of 5°C/s or more and 100°C/s or less;

    retaining the cold rolled steel sheet in a temperature range from 500°C to a retention stop temperature T5 of an Ms temperature (°C) or higher and 320°C or higher at an average cooling rate CR6 of 10°C/s or less for 10 s or longer and 60 s or shorter;

    cooling the cold rolled steel sheet in a temperature range from the retention stop temperature T5 to a temperature T1 of 200°C or higher and (Ms temperature (°C) - 30°C) or lower at an average cooling rate CR7 of 3°C/s or more and 100°C/s or less;

heating the cold rolled steel sheet in a temperature range from the temperature T1 to a temperature T2 of 300°C or higher and 450°C or lower at an average heating rate of 2°C/s or more;

cooling the cold rolled steel sheet in a temperature range from the temperature T2 to a temperature T3 of (T2 - 150°C) or higher and (T2 - 30°C) or lower at an average cooling rate CR2 of 0.5°C/s or more;

cooling the cold rolled steel sheet in a temperature range from the temperature T3 to a temperature T4 of 150°C or higher and 350°C or lower and the temperature T3 or lower at an average cooling rate CR3 of 0.1°C/s or more;

holding the cold rolled steel sheet in a temperature range from 150°C or higher and 350°C or lower and the temperature T4 or lower for 20 s or longer and 1000 s or shorter; and

cooling the cold rolled steel sheet to a temperature of 50°C or lower at an average cooling rate CR4 of 1°C/s or more.

7. The method for producing a steel sheet according to Claim 5, further comprising hot-dip-galvanizing or hot-dip-galvannealing the steel sheet after the steel sheet is cooled at the average cooling rate CR1 of 3°C/s or more and 100°C/s or less.

8. The method for producing a steel sheet according to Claim 6, further comprising hot-dip-galvanizing or hot-dip-galvannealing the steel sheet after the steel sheet is cooled at the average cooling rate CR7 of 3°C/s or more and 100°C/s or less.

9. The method for producing a steel sheet according to Claim 5 or 6, further comprising electrogalvanizing the steel sheet after the steel sheet is cooled at the average cooling rate CR4 of 1°C/s or more.

10. A method for producing a member, the method comprising a step of preparing a member by subjecting the steel sheet according to any one of Claims 1 to 3 to either or both of a forming process and a joining process.

# FIG. 1

# FIG. 2

(a)

TEMPERATURE/C°

CR1 · CR2 · CR3 · CR4 · T1 · T2 · T3 · T4

TIME/s

(b)

TEMPERATURE/C°

CR5 · CR6 · CR2 · CR3 · CR4 · T5 · CR7 · T1 · T2 · T3 · T4

TIME/s

33

FIG. 3

EP 4 660 347 A1

## EP 4 660 347 A1

## INTERNATIONAL SEARCH REPORT

| | International application No. |
|---|---|
| | **PCT/JP2024/010116** |

### A. CLASSIFICATION OF SUBJECT MATTER

*C22C 38/00*(2006.01)i; *C21D 9/46*(2006.01)i; *C22C 38/06*(2006.01)i; *C22C 38/60*(2006.01)i
FI:    C22C38/00 301S; C21D9/46 G; C21D9/46 J; C22C38/00 301T; C22C38/06; C22C38/60

According to International Patent Classification (IPC) or to both national classification and IPC

### B. FIELDS SEARCHED

Minimum documentation searched (classification system followed by classification symbols)

C22C38/00; C21D9/46; C22C38/06; C22C38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/004820 A1 (JFE STEEL CORPORATION) 06 January 2022 (2022-01-06) | 1-10 |
| A | WO 2022/004818 A1 (JFE STEEL CORPORATION) 06 January 2022 (2022-01-06) | 1-10 |
| A | WO 2022/004817 A1 (JFE STEEL CORPORATION) 06 January 2022 (2022-01-06) | 1-10 |
| A | WO 2019/186997 A1 (NIPPON STEEL CORPORATION) 03 October 2019 (2019-10-03) | 1-10 |
| A | JP 2019-505691 A (ARCELORMITTAL) 28 February 2019 (2019-02-28) | 1-10 |
| A | JP 2017-507241 A (ARCELORMITTAL) 16 March 2017 (2017-03-16) | 1-10 |
| A | JP 2007-211280 A (NIPPON STEEL CORP.) 23 August 2007 (2007-08-23) | 1-10 |

☐ Further documents are listed in the continuation of Box C.   ☑ See patent family annex.

\*    Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

35

## INTERNATIONAL SEARCH REPORT
### Information on patent family members

International application No.

**PCT/JP2024/010116**

| Patent document cited in search report | | | Publication date (day/month/year) | Patent family member(s) | | | Publication date (day/month/year) |
|---|---|---|---|---|---|---|---|
| WO | 2022/004820 | A1 | 06 January 2022 | US | 2023/0243014 | A1 | |
| | | | | EP | 4141132 | A1 | |
| | | | | KR | 10-2023-0013273 | A | |
| | | | | CN | 115715332 | A | |
| WO | 2022/004818 | A1 | 06 January 2022 | US | 2023/0220510 | A1 | |
| | | | | EP | 4137601 | A1 | |
| | | | | CN | 115698361 | A1 | |
| | | | | KR | 10-2023-0012027 | A1 | |
| WO | 2022/004817 | A1 | 06 January 2022 | EP | 4137593 | A1 | |
| | | | | CN | 115698362 | A | |
| | | | | KR | 10-2023-0012026 | A | |
| WO | 2019/186997 | A1 | 03 October 2019 | US | 2021/0095356 | A1 | |
| | | | | KR | 10-2020-0123829 | A | |
| | | | | CN | 111971408 | A | |
| JP | 2019-505691 | A | 28 February 2019 | US | 2018/0371566 | A1 | |
| | | | | EP | 3653739 | A1 | |
| | | | | CN | 108431248 | A | |
| | | | | KR | 10-2018-0096637 | A | |
| JP | 2017-507241 | A | 16 March 2017 | US | 2016/0312326 | A1 | |
| | | | | EP | 3084014 | B1 | |
| | | | | CN | 105874086 | A | |
| | | | | KR | 10-2016-0096611 | A | |
| JP | 2007-211280 | A | 23 August 2007 | (Family: none) | | | |

Form PCT/ISA/210 (patent family annex) (July 2022)

**REFERENCES CITED IN THE DESCRIPTION**

**Patent documents cited in the description**

- JP 6338038 B
- JP 6795122 B
- JP 4903915 B